(19) Europäisches Patentamt
European Patent Office
Office européen des brevets

(11) EP 0 525 392 B1

(12) EUROPÄISCHE PATENTSCHRIFT

(45) Veröffentlichungstag und Bekanntmachung des Hinweises auf die Patenterteilung:
**21.08.1996 Patentblatt 1996/34**

(21) Anmeldenummer: **92110752.0**

(22) Anmeldetag: **25.06.1992**

(51) Int. Cl.$^6$: **C07F 7/18**, C08G 77/04, C08G 65/04, C07F 7/08, C07F 7/10, C07F 7/12, C08G 77/14, C08G 77/58, C08G 65/10

(54) **Hydrolysierbare und polymerisierbare Silane**
Hydrolysable and polymerisable silanes
Silanes hydrolysables et polymérisables

(84) Benannte Vertragsstaaten:
**AT BE CH DE DK FR GB IT LI LU NL SE**

(30) Priorität: **30.07.1991 DE 4125201**

(43) Veröffentlichungstag der Anmeldung:
**03.02.1993 Patentblatt 1993/05**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder: **Wolter, Herbert, Dr. Dipl.-Chem.**
**W-6975 Gerchsheim (DE)**

(56) Entgegenhaltungen:
**EP-A- 0 450 624** **EP-A- 0 451 709**

- **CHEMICAL ABSTRACTS, vol. 113, no. 4, 1990, Columbus, Ohio, US; abstract no. 33281x, TAKASUGI, S. Seite 631 ;**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 525 392 B1

**Beschreibung**

Die Erfindung betrifft hydrolysierbare und polymerisierbare Silane, ein Verfahren zu deren Herstellung und deren Verwendung zur Herstellung von Kieselsäurepolykondensaten bzw. -heteropolykondensaten und zur Herstellung von Polymerisaten bzw. Heteropolymerisaten.

Hydrolysierbare, organisch modifizierte Silane finden eine breite Anwendung bei der Herstellung von kratzfesten Beschichtungen für die unterschiedlichsten Substrate, von Füllstoffen, von Klebe- und Dichtungsmassen oder von Formkörpern. Dabei werden diese Silane entweder alleine, in Mischungen oder in Gegenwart weiterer hydrolysierbarer und/oder kondensierbarer Komponenten hydrolytisch kondensiert, wobei die endgültige Härtung thermisch oder photochemisch erfolgt.

So sind z.B. aus der DE 3407087 C2 kratzfeste Beschichtungen bekannt, die durch hydrolytische Kondensation einer Mischung entstehen, die u.a. aus einer hydrolysierbaren titan- oder zirkonorganischen Verbindung $MR_4$ und aus einem hydrolysierbaren, organofunktionellen Silan $R'_m(R''Y)_nSiX_{(4-m-n)}$ besteht, wobei R z.B. Halogen, Hydroxy, Alkoxy oder Acyloxy bedeutet, R' z.B. Alkyl oder Alkenyl, R'' z.B. Alkylen oder Alkenylen und X einen hydrolysierbaren Rest.

Aus der DE 3536716 A1 sind z.B. Klebe- und Dichtungsmassen bekannt, die erhalten worden sind durch hydrolytische Kondensation eines oder mehrerer Organosilane der allgemeinen Formel $R_mSiX_{4-m}$ und gegebenenfalls einer oder mehrerer der Komponenten $SiX_4$ und/oder $R_n(R''Y)_pSiX_{4-n-p}$, wobei R und R'' z.B. Alkyl, Alkenyl, Aryl, Alkylaryl, Arylalkyl, Alkenylaryl oder Arylalkenyl, X z.B. Wasserstoff, Halogen, Hydroxy, Alkoxy oder Acyloxy bedeutet, und Y z.B. ein Halogen oder eine gegebenenfalls substituierte Amino-, Amid-, Aldehyd-, Alkylcarbonyl-, Carboxy-, Hydroxy-, Mercapto- oder Cyano-Gruppe darstellt.

Ferner sind handelsübliche Silane mit reaktiven Doppelbindungen bekannt, wie z.B. (Meth)acryloxysilane des folgenden Typs,

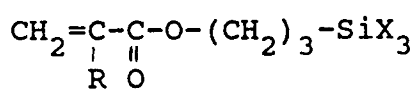

wobei R Wasserstoff oder Methyl bedeutet und X z.B. Halogen oder Alkoxy ist. Diese Silane sind hydrolysier- und polymerisierbar und können für die Herstellung der oben genannten Systeme eingesetzt werden. Sie bieten den großen Vorteil, das die resultierende Beschichtung, die resultierende Füll-, Klebe- oder Dichtungsmasse oder der resultierende Formkörper durch Polymerisation an den reaktiven Doppelbindungen thermisch oder photochemisch gehärtet werden kann.

Nachteilig wirkt sich jedoch bei all diesen Systemen die Tatsache aus, daß bei der Polymerisation eine Volumenabnahme, d.h. ein sog. Härtungsschrumpf auftritt, der dazu führt, daß in der Beschichtung, in der Füll-, Klebe- oder Dichtungsmasse oder in den Formkörpern Spannungen entstehen und/oder die Maßhaltigkeit verloren geht. Die Spannungen können zu makroskopischen Zerstörungen führen, d.h. zu Rissen oder gar zu Abplatzungen, oder zu mikroskopischen Zerstörungen, wie z.B. zu optischen Störungen (ortsabhängiger Brechungsindex, Interferrenzen), zu geringeren mechanischen Stabilitäten, zu Oberflächenstrukturen, etc. Der Verlust der Maßhaltigkeit macht sich besonders bei Abformmassen (optische Gitter, etc.) und bei Formkörpern (z.B. beim Spritzguß, etc.) als sehr störend bemerkbar.

Aufgabe der vorliegenden Erfindung war es deshalb, neue, organisch modifizierte Silane bereit zu stellen, die hydrolysier- und polymersisierbar sind, die alleine, in Mischungen oder zusammen mit anderen hydrolysier-, kondensier- oder polymersisierbaren Komponenten zu kratzfesten Beschichtungen, zu Füll-, Klebe- oder Dichtungsmassen, zu Formkörpern oder zu Einbettmaterialien verarbeitet werden können, und die zu Beschichtungs-, Füll-, Klebe- oder Dichtungsmassen, zu Formkörpern oder zu Einbettmaterialien führen, die bei der Härtung keine Volumenabnahme erleiden und die eine gute Substrathaftung aufweisen. Diese Silane sollen universell einsetzbar sein, dort wo kein oder ein reduzierter Schrumpf, oder gar eine Expansion gefragt ist, und sie sollen in ein anorganisch-organisches Verbundsystem, d.h. in ein anorganisch-organisches Netzwerk eingebaut werden können. Ferner sollen diese Silane schnell und einfach, d.h. ohne aufwendigen Syntheseprozeß herzustellen sein.

Gelöst wird diese Aufgabe durch hydrolysierbare und polymerisierbare Silane der allgemeinen Formel (I),

$$Y_n\ Si\ X_m\ R_{4-(n+m)} \qquad (I)$$

in der die Reste X, Y und R gleich oder verschieden sind und die folgende Bedeutung haben:

R = Alkyl, Alkenyl, Aryl, Alkylaryl oder Arylalkyl,
mit gegebenenfalls einem oder mehreren Substituenten aus der Gruppe Halogen, Alkyl, Hydroxyalkyl, Alkoxy,

Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$;

X = Wasserstoff, Halogen, Hydroxy, Alkoxy, Acyloxy, Alkylcarbonyl, Alkoxycarbonyl oder $NR'_2$, mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$, und mit R' = Wasserstoff, Alkyl oder Aryl;

Y = ein Substituent, der einen substituierten oder unsubstituierten 1,4,6-Trioxaspiro-[4,4]-nonan-Rest enthält, der über Alkylen- oder Alkenylengruppen an das Si-Atom gebunden ist und der gegebenenfalls mit Hydroxyl-, Alkyl-, Alkenyl-, Aryl-, Alkylaryl-, Arylalkyl-, Alkylcarbonyl-, Alkoxycarbonyl-, Acryloxy- oder Methacryloxygruppen substituiert sein kann;

n = 1, 2 oder 3,

m = 1, 2 oder 3, mit $n+m \leqq 4$.

Die Reste X sind hydrolysierbar und die Reste Y sind polymerisierbar, wobei jeweils mindestens ein Rest X und Y mit der oben genannten Bedeutung in den erfindungsgemäßen Silanen vorhanden ist.

Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl. Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Isocyanato, Nitro, Epoxy, $SO_3H$ und $PO_4H_2$. Unter den Halogenen sind Fluor, Chlor und Brom bevorzugt.

Die substituierten bzw. unsubstituierten 1,4,6-Trioxaspiro-[4,4]-nonan-Gruppen sind über Alkylen- oder über Alkenylen-Reste, die durch Ether- oder Ester-Gruppen unterbrochen sein können, an das Si-Atom gebunden. Spezielle Beispiele und bevorzugte Ausführungsformen der Reste Y sind

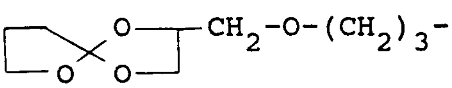 ,

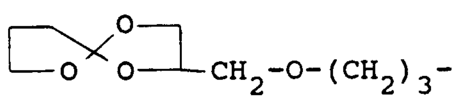 ,

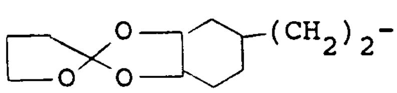 ,

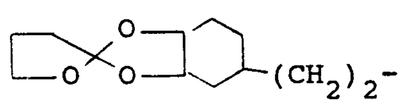 ,

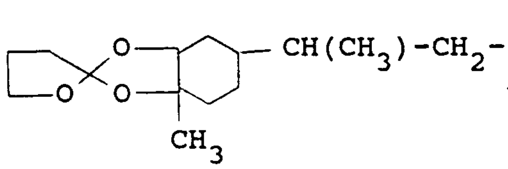 und

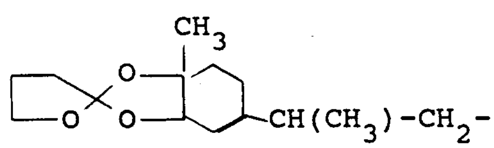 ,

wobei das Ringsystem, das sich vom γ-Butyrolacton ableitet, auch wie in Anspruch 2 dargestellt, substituiert sein kann. Die Substituenten können Wasserstoff, Halogen, Hydroxyl-, Alkyl-, Alkenyl-, Aryl-, Alkylaryl-, Arylalkyl-, Alkylcarbonyl-, Alkoxycarbonyl-, Acryloxy- oder Methacryloxy-Gruppen sein. Konkrete Beispiele hierfür sind

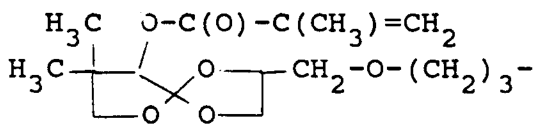

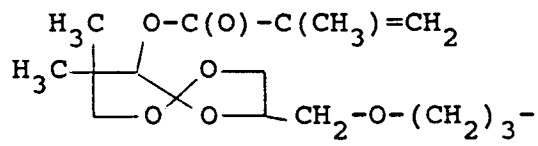

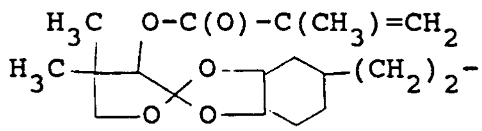

oder

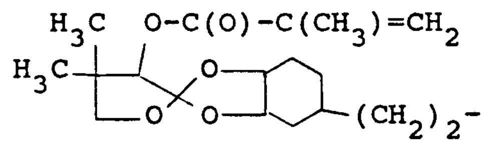

Konkrete Beispiele der erfindungsgemäßen Silane sind:

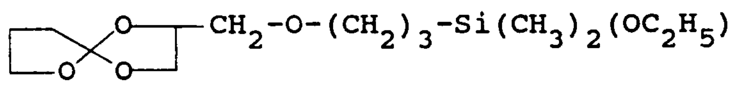

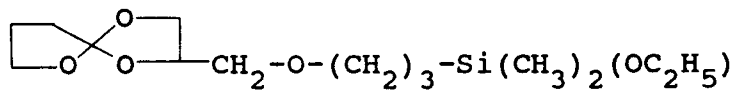

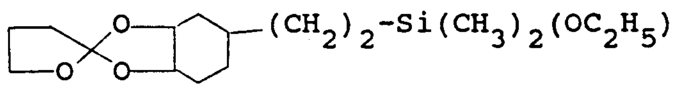

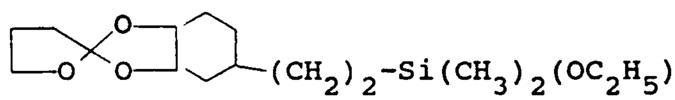

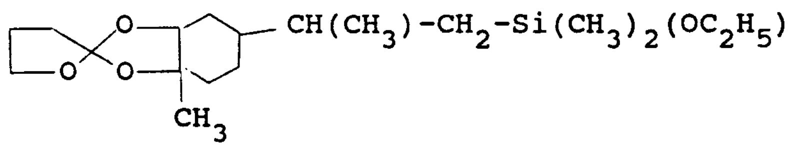

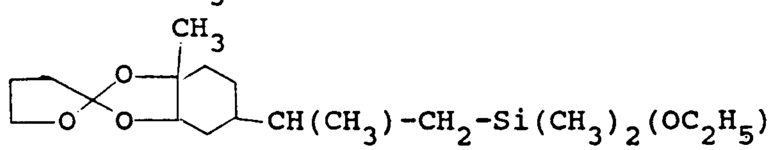

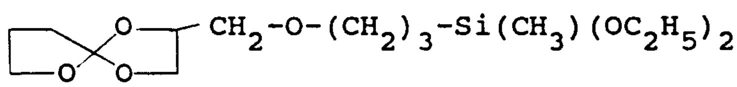

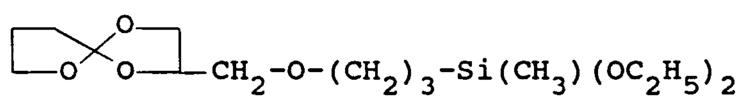

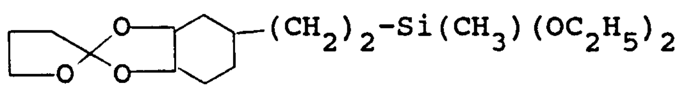

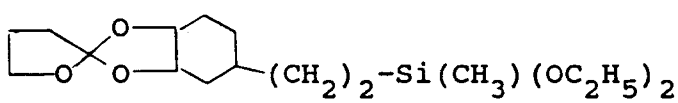

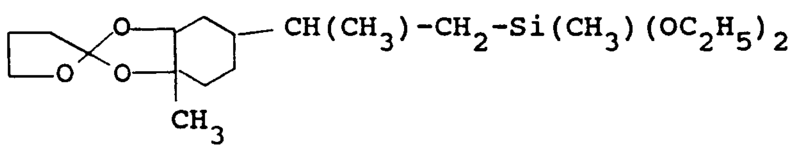

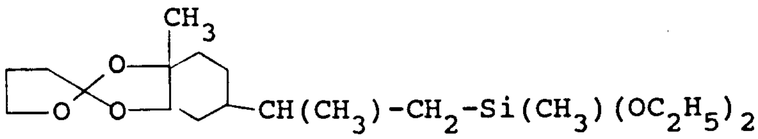

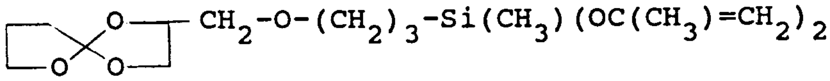

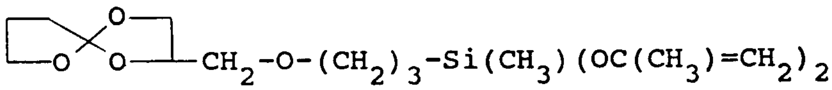

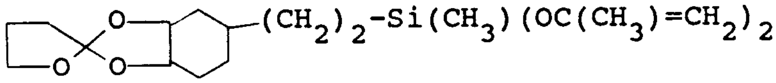

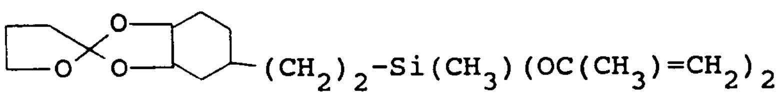

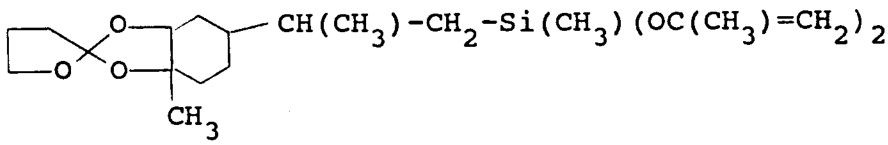

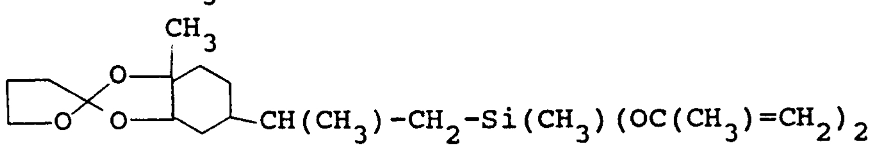

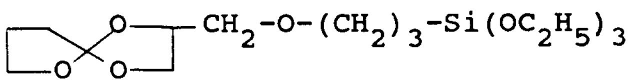

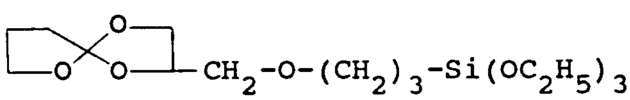

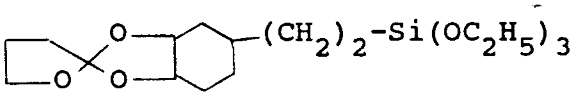

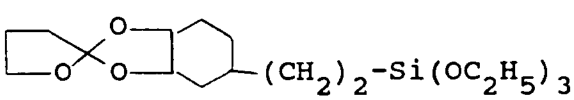

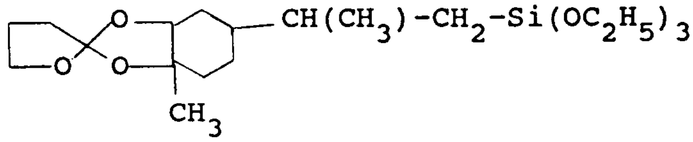

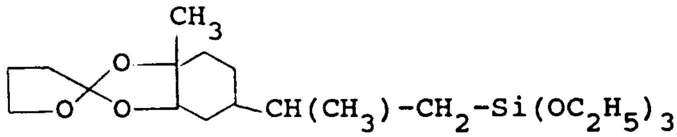

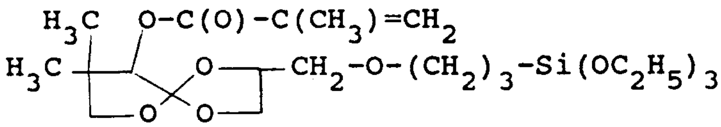

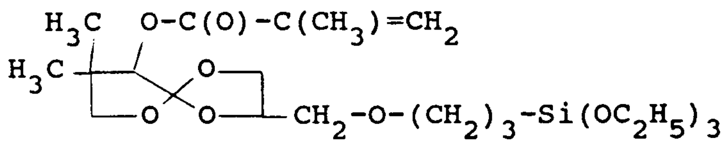

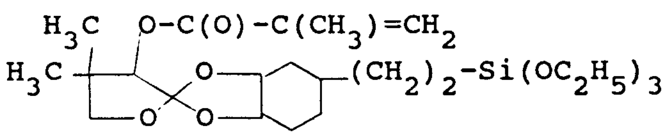

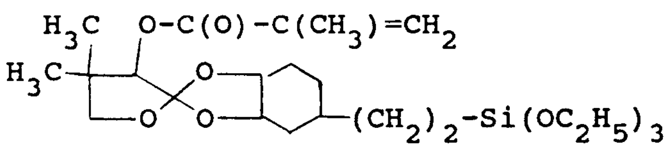

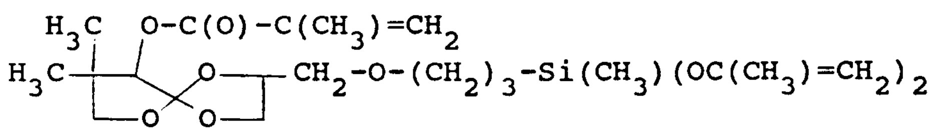

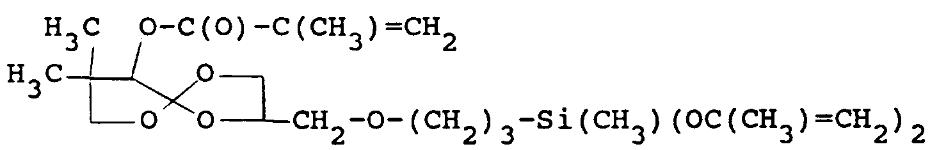

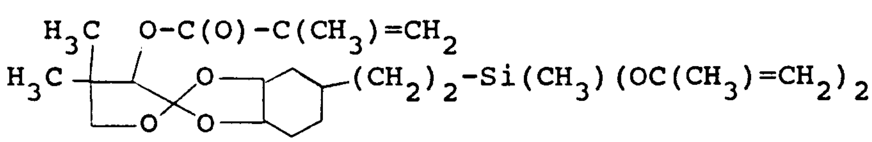

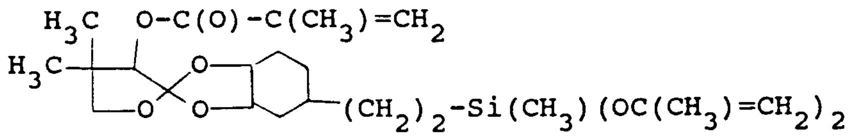

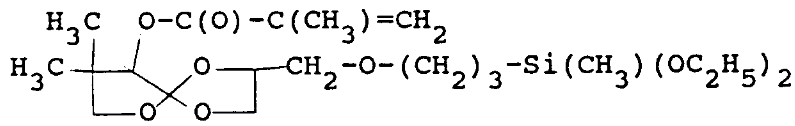

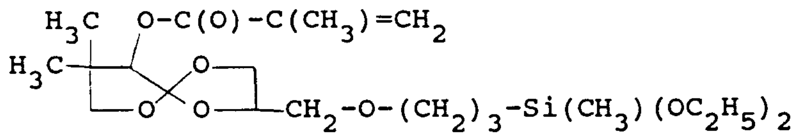

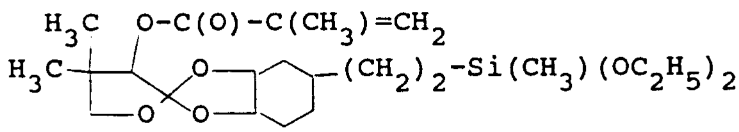

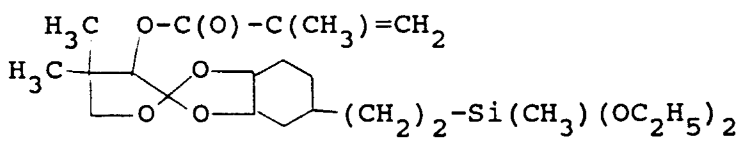

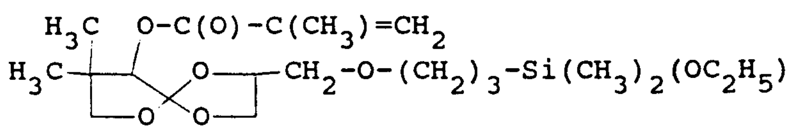

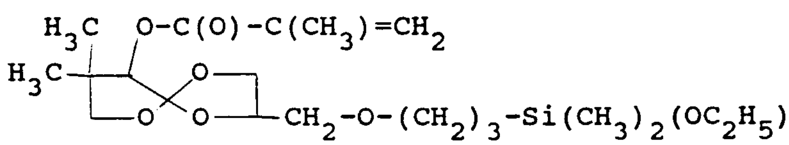

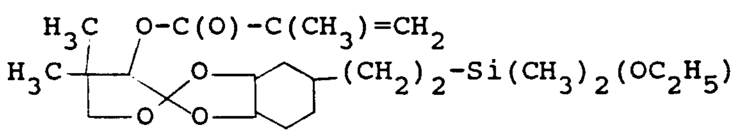

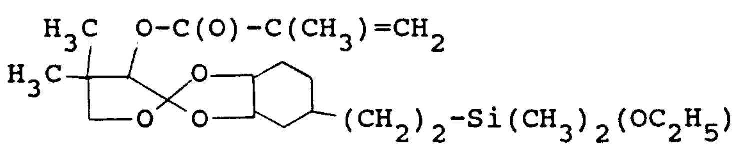

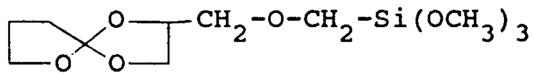

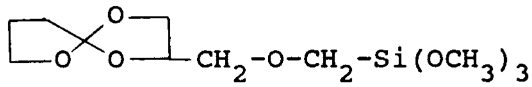

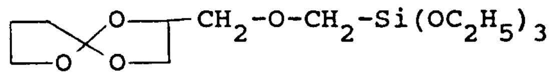

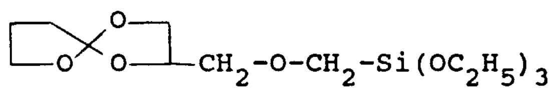

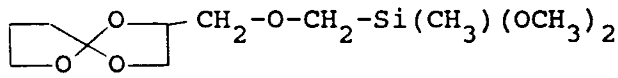

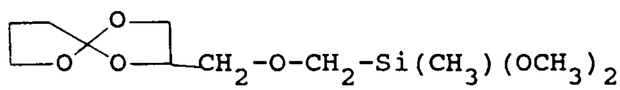

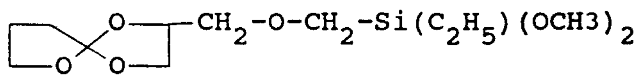

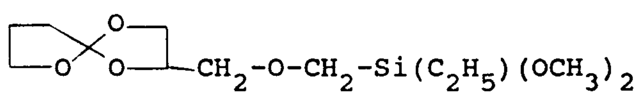

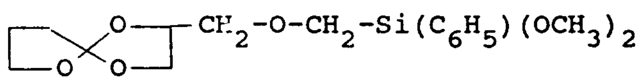

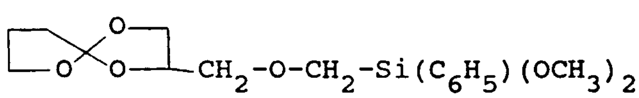

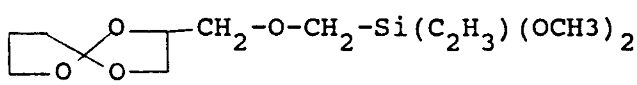

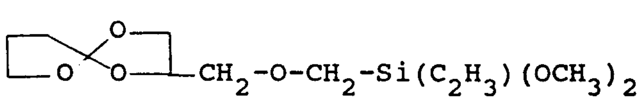

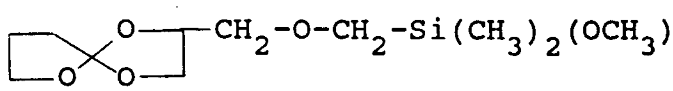

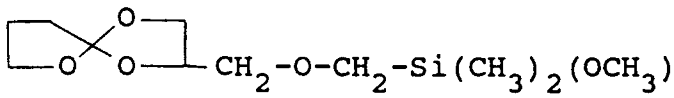

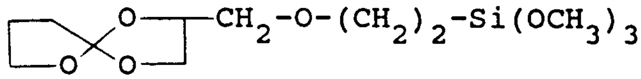

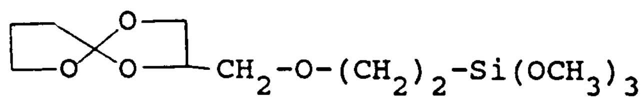

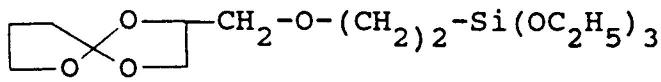

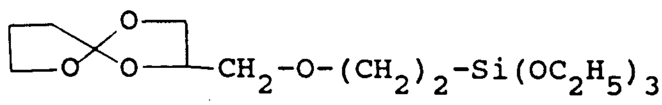

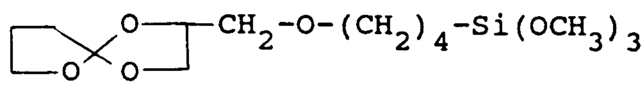

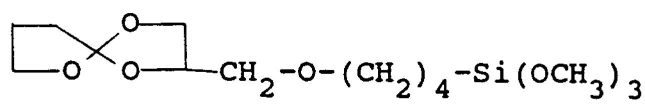

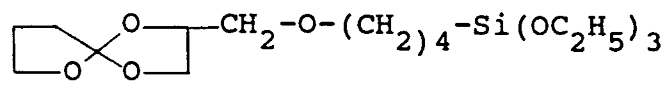

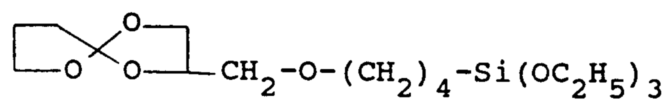

Die Herstellung der erfindungsgemäßen Silane erfolgt durch Umsetzung von Silanen der allgemeinen Formel (II),

$$Y'_n \, Si \, X_m \, R_{4-(n+m)} \qquad (II)$$

mit substituierten oder unsubstituierten γ-Butyrolactonen in Anwesenheit einer Lewis-Säure und gegebenenfalls in einem inerten, wasserfreien Lösungsmittel, wobei das γ -Butyrolacton im Überschuß zugesetzt wird. Die Reste X, Y' und R in der allgemeinen Formel (II) sind gleich oder verschieden, X, R, n und m haben die selbe Bedeutung wie in den erfindungsgemäßen Silanen der allgemeinen Formel (I), und Y' ist ein Rest, der einen substituierten Oxiran-Ring darstellt. Für die möglichen Ausgestaltungen der Reste X und R gilt das für die erfindungsgemäßen Silane der allgemeinen

Formel (I) gesagte.

Spezielle Beispiele für Silane der allgemeinen Formel (II) sind: Glycidoxymethyltrimethoxysilan, Glycidoxymethyltriethoxysilan, 2-Glycidoxyethyltrimethoxysilan, 2-Glycidoxyethyltriethoxysilan, 3-Glycidoxypropyltrimethoxysilan, 3-Glycidoxypropyltriethoxysilan, 3-Glycidoxypropyltri(methoxyethoxy)silan, 3-Glycidoxypropyltriacetoxysilan, 4-Glycidoxybutyltrimethoxysilan, 4-Glycidoxybutyltriethoxysilan, Glycidoxymethyl(methyl)dimethoxysilan, Glycidoxymethyl(ethyl)dimethoxysilan, Glycidoxymethyl(phenyl)dimethoxysilan, Glycidoxymethyl(vinyl)dimethoxysilan, Glycidoxymethyl(dimethyl)methoxysilan, 2-Glycidoxyethyl(methyl)dimethoxysilan, 2-Glycidoxyethyl(ethyl)dimethoxysilan, 2-Glycidoxyethyl(dimethyl)methoxysilan, 3-Glycidoxypropyl(methyl)dimethoxysilan, 3-Glycidoxypropyl(ethyl)dimethoxysilan, 3-Glycidoxypropyl(dimethyl)methoxysilan, 4-Glycidoxybutyl(methyl)dimethoxysilan, 4-Glycidoxybutyl(ethyl)dimethoxysilan, 4-Glycidoxybutyl(dimethyl)methoxysilan, Bis-(glycidoxymethyl)dimethoxysilan, Bis-(glycidoxymethyl)diethoxysilan, Bis-(glycidoxyethyl)dimethoxysilan, Bis-(glycidoxyethyl)diethoxysilan, Bis-(glycidoxypropyl)dimethoxysilan, Bis-(glycidoxypropyl)diethoxysilan, Tris-(glycidoxymethyl)methoxysilan, Tris-(glycidoxymethyl)ethoxysilan, Tris-(glycidoxyethyl)methoxysilan, Tris-(glycidoxyethyl)ethoxysilan, Tris-(glycidoxypropyl)methoxysilan, Tris-(glycidoxypropyl)ethoxysilan, Glycidylmethyltrimethoxysilan, Glycidylmethyltriethoxysilan, 2-Glycidylethyltrimethoxysilan, 2-Glycidylethyltriethoxysilan, 3-Glycidylpropyltrimethoxysilan, 3-Glycidylpropyltriethoxysilan, 3-Glycidylpropyltri(methoxyethoxy)silan, 3-Glycidylpropyltriacetoxysilan, 3.4-Epoxycyclohexylmethyltrimethoxysilan, 3.4-Epoxycyclohexylmethyltriethoxysilan, 3.4-Epoxycyclohexylethyltrimethoxysilan, 3.4-Epoxycyclohexylpropyltrimethoxysilan, 3.4-Epoxycyclohexylbutyltrimethoxysilan,

Silane mit der allgemeinen Formel (II) sind käuflich erwerbbar, so z.B. bei der ABCR GmbH & Co.KG (Karlsruhe) das 3-Glycidoxypropyldimethylethoxysilan, das (3-Glycidoxypropyl)methyldiethoxysilan, das 3-Glycidoxypropylmethyldi-isopropenoxysilan, das (3-Glycidoxypropyl)trimethoxysilan, das 2-(3.4-Epoxycyclohexyl)ethyltrimethoxysilan oder das [2-(3.4-Epoxy-4-methylcyclohexyl)propyl]-methyldiethoxysilan.

All diese Silane können mit γ-Butyrolactonen in die entsprechenden, erfindungsgemäßen Spiro-Silane übergeführt werden.

Geeignete γ-Butyrolactone zur Herstellung der erfindungsgemäßen Spiro-Silane sind das unsubstituierte γ-Butyrolacton, sowie mit Halogen, Hydroxyl-, Alkyl-, Alkenyl, Aryl-, Alkylaryl-, Arylalkyl-, Alkylcarbonyl-, Alkoxycarbonyl-, Acryloxy- oder Methacryloxy-Gruppen substituierte γ-Butyrolactone.

Die Alkyl-Reste sind z.B. geradkettige, verzweigte oder cyclische Reste mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl.

Die Alkenyl-Reste sind z.B. geradkettige, verzweigte oder cyclische Reste mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Spezielle Beispiele und bevorzugte Ausführungsformen für Lewis-Säuren sind z.B. $BF_3 \cdot Et_2O$, $SnCl_4$ oder $AlCl_3$.

Die Umsetzung der Silane der allgemeinen Formel (II) mit den γ-Butyrolactonen zu den erfindungsgemäßen Spiro-Silanen erfolgt unter Wasserausschluß, gegebenenfalls in einem inerten Lösungsmittel. Zur Reinigung der erfindungsgemäßen Spiro-Silane werden bekannte Techniken, wie z.B. die Hochvakuumdestillation, angewendet.

Am Beispiel der Umsetzung von γ-Butyrolacton mit dem (3-Glycidoxypropyl)trimethoxysilan in Anwesenheit von $BF_3 \cdot Et_2O$ wird die Darstellung der erfindungsgemäßen Spiro-Silane schematisch dargestellt.

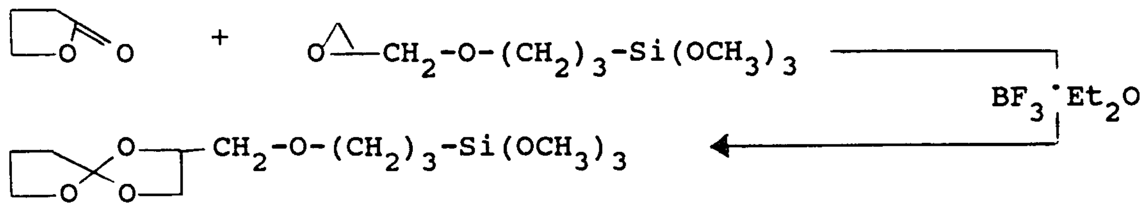


Es ist auch möglich, die gemäß der obigen Reaktion erhaltenen Spiro-Silane nach bekannten Methoden weiter zu modifizieren und andere Substituenten einzuführen, z.B. in dem Ringsystem, das sich vom γ-Butyrolacton ableitet. So ist z.B. im Journal f. prakt. Chemie, Band 330, Heft 2, 1988, S. 316 - 318, beschrieben, wie an diesem Ringsystem Methacrylgruppen in spirocyclische Orthoester eingeführt werden können.

Die erfindungsgemäßen Spiro-Silane sind stabile Verbindungen, und können entweder alleine oder zusammen mit anderen hydrolysierbaren, kondensierbaren und/oder polymerisierbaren Komponenten zu Kieselsäurepolykondensaten oder zu Kieselsäureheteropolykondensaten verarbeitet werden, deren endgültige Härtung dann durch Polymerisation über eine Ringöffnung der 1.4.6-Trioxaspiro-[4.4]-nonan-Gruppe erfolgt. Die erfindungsgemäßen Silane können aber auch alleine oder zusammen mit anderen hydrolysierbaren, kondensierbaren und/oder polymerisierbaren Komponenten zu Polymerisaten verarbeitet werden, die durch anschließende hydrolytische Kondensation verfestigt werden

können.

Kieselsäure(hetero)polykondensate, die mit organischen Gruppen modifiziert sind, sowie Verfahren zu deren Herstellung (z.B. ausgehend von hydrolytisch kondensierbaren Organosilanen nach dem Sol-Gel-Prozeß) sind in großer Zahl bekannt. Derartige Kondensate finden für die verschiedenstens Zwecke Verwendung, z.B. als Formmassen, als Lacke für Überzüge, etc. Aufgrund der vielfältigen Anwendungsmöglichkeiten dieser Substanzklasse besteht aber auch ein ständiges Bedürfnis nach Modifizierung der bereits bekannten Kondensate, zum einen um dadurch neue Anwendungsgebiet zu erschließen und zum anderen, um deren Eigenschaften für bestimmte Verwendungszwecke noch weiter zu optimieren.

Die erfindungsgemäßen Spiro-Silane sind im basischen Milieu hydrolysier- und kondensierbar, ohne daß der Spirokomplex vorzeitig geöffnet wird. Dadurch ist es möglich, die erfindungsgemäßen Spiro-Silane durch hydrolytische Kondensation in anorganisch-organisches Netzwerk einzubauen. Die erfindungsgemäßen Spiro-Silane enthalten hydrolysierbare Gruppen X, z.B. Alkoxy-Gruppen, so daß damit ein anorganisches Netzwerk (Si-O-Si-Einheiten) aufgebaut werden kann, während die im Rest Y enthaltenden Spiro-Gruppen unter Aufbau eines organischen Netzwerkes polymerisiert werden können. Dadurch ist es möglich, organisch modifizierte, hydrolysier- und kondensierbare Silane in Beschichtungs-, Füll-, Klebe- und Dichtungsmassen, in Formkörpern und Einbettmassen nach dem Stand der Technik durch die erfindungsgemäßen Spiro-Silane zu ersetzen.

Zum Aufbau des anorganischen Netzwerkes werden die erfindungsgemäßen Silane, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist.

Zum Aufbau des organischen Netzwerkes werden die erfindungsgemäßen Spiro-Silane gegebenenfalls unter Zusatz anderer copolymerisierbarer Komponenten polymerisiert. Die Polymerisation kann z.B. thermisch oder photochemisch unter Einsatz von Methoden erfolgen, wie sie in den DE-A1 3143820, 3826715 und 3835968 beschrieben sind.

Als weitere polymerisierbare Komponenten können Verbindungen zugesetzt werden, die radikalisch und/oder ionisch polymerisierbar sind. Radikalisch polymerisierbare Verbindungen, die zugesetzt werden können, sind z.B. solche mit C=C-Doppelbindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide, oder Vinylether. Es können aber auch Verbindungen zugesetzt werden, die sowohl kationisch als auch radikalisch polymerisierbar sind, wie z.B. Methacryloyl-Spiroorthoester. Diese sind radikalisch über die C=C Doppelbindung und kationisch unter Ringöffnung polymerisierbar. Die Herstellung dieser Systeme ist z.B. im Journal f. prakt. Chemie, Bd 330, Heft2, 1988, S.316-318, beschrieben.

Ferner ist es möglich, andere bekannte, silan-gebundene cyclische Systeme zuzusetzen, die mit einpolymerisiert werden können. Solche Systeme sind z.B. solche, die Epoxide enthalten und u.a. für die Herstellung der erfindungsgemäßen Spiro-Silane eingesetzt werden. Solche Systeme sind bei der Herstellung der erfindungsgemäßen Spiro-Silane beschrieben.

Die erfindungsgemäßen Spiro-Silane stellen hochreaktive Systeme dar, die zu Poly(hetero)kondensaten führen, die z.B. bei UV-Bestrahlung innerhalb kürzester Zeit zu mechanisch stabilen Überzügen oder Form- bzw. Füllkörpern führen. Die erfindungsgemäßen Spiro-Silane sind über einfache Additionsreaktionen herstellbar und können durch geeignete Auswahl der Ausgangsverbindungen eine variierbare Anzahl reaktiver Gruppen unterschiedlicher Funktionalität aufweisen.

Bei Anwesenheit von zwei oder mehr Resten Y ist die Ausbildung eines dreidimensionalen, organischen Netzwerkes möglich. Über den Abstand zwischen dem Si-Atom und der Spiro-Gruppe, d.h. über die Kettenlänge, und über die Anwesenheit weiterer funktioneller Gruppen in dieser Kette, sowie über die Anzahl der Alkoxy-Gruppen am Silan können die mechanischen Eigenschaften (z.B. Flexibilität) und die physikalisch-chemischen Eigenschaften (Adsorption, Brechzahl, Haftung etc.) der Poly(hetero)kondensate beeinflußt werden. Durch die Ausbildung eines anorganischen Netzwerkes können je nach Art und Anzahl der hydrolysierbaren Gruppen (z.B. Alkoxy-Gruppen) silicon- oder glasartige Eigenschaften der Poly(hetero)kondensate eingestellt werden.

Berücksichtigt man dann noch die Variationsmöglichkeiten der cokondensierbaren und copolymerisierbaren Komponenten, so wird offenbar, daß über die erfindungsgemäßen Spiro-Silane Kieselsäurepoly(hetero)kondensate zur Verfügung gestellt werden, die in vielfältiger Weise an vorgegebene Einsatzgebiete angepaßt werden können, und die deshalb auf allen Gebieten, auf denen bereits bisher Kieselsäure(hetero)polykondensate eingesetzt werden, Verwendung finden können, aber auch neue Verwendungsmöglichkeiten eröffnen, z.B. auf dem Gebiet der Optik, der Elektronik, der Medizin, der Optoelektronik und der Verpackungsmittel für Lebensmittel etc.

Die erfindungsgemäßen Spiro-Silane können entweder als solche verwendet werden oder in Zusammensetzungen, die zusätzlich an den Verwendungszweck angepaßte Additive enthalten, z.B. übliche Lackadditive, Lösungsmittel, Füllstoffe, Photoinitiatoren, thermische Initiatoren, Verlaufmittel und Pigmente. Die erfindungsgemäßen Spiro-Silane oder die silanhaltigen Zusammensetzungen eignen sich z.B. zur Herstellung von Beschichtungs-, Füllstoff- oder Bulkmaterialien, von Klebstoffen und Spritzgießmassen, von Fasern, Folien, Haftvermittlern, von Abformmassen und von Einbettmaterialien. Aufgrund der vorhandenen Spiro-Gruppen erfahren sie bei der Aushärtung keine oder nur eine geringe Schrumpfung, oder, wenn gewünscht, sogar eine Expansion. Der Schrumpf ist also an die vorgegebenen Bedingungen des jeweiligen Anwendungsfalles anpaßbar. Beschichtungen und Formkörper aus den erfindungsgemäßen Spiro-Silanen haben den Vorteil, daß sie photochemisch strukturierbar sind. Spezielle Anwendungsgebiete sind z.B. die Beschichtung von Substraten aus Metall, Kunststoff, Papier, Keramik etc. durch Tauchen, Gießen, Streichen, Spritzen, elektrostatisches Spritzen, Elektrotauchlakierung etc., der Einsatz für optische, optoelektrische oder elektronische Komponenten, die Herstellung von Füllstoffen, die Herstellung von kratzfesten, abriebfesten Korrosionsschutzbeschichtungen,
die Herstellung von Formkörpern, z.B. durch Spritzguß, Formgießen oder Extrusion, und die Herstellung von Compositen, z.B. mit Fasern, Füllstoffen oder Geweben.

Neben den erfindungsgemäßen Spiro-Silanen der Formel (I) können noch weitere hydrolytisch kondensierbare Verbindungen des Siliciums, des Bors, des Aluminiums, des Phosphors, des Zinns, des Bleis, der Übergangsmetalle, der Lanthaniden oder Actiniden eingesetzt werden. Diese Verbindungen können entweder als solche oder bereits in vorkondensierter Form zur Herstellung der Polykondensate herangezogen werden. Bevorzugt ist es, wenn mindestens 10 Mol-%, insbesondere mindestens 80 Mol-% und speziell mindestens 90 Mol-%, auf der Basis momomerer Verbindungen, der zu Herstellung der Kieselsäure(hetero)polykondensate herangezogenen Ausgangsmaterialien Silicium-Verbindungen sind.

Ebenso ist es bevorzugt, wenn den Kieselsäure(hetero)polykondensaten mindestens 5 Mol-%, z.B. 25 bis 100 Mol-%, insbesondere 50 bis 100 Mol-% und speziell 75 bis 100 Mol-%, jeweils auf der Basis monomerer Verbindungen, an einem oder mehreren der erfindungsgemäßen Spiro-Silane zugrundeliegen.

Unter den von Silanen der allgemeinen Formel (I) verschiedenen, hydrolytisch kondensierbaren Silicium-Verbindungen, die gegebenenfalls eingesetzt werden können, sind solche der allgemeinen Formel (III) besonders bevorzugt,

$$R_a(R''Z')_bSiX_{4-(a+b)} \qquad \text{(III)}$$

in der die Reste R, R'', X und Z' gleich oder verschieden sind und folgende Bedeutung haben:

R = Alkyl, Alkenyl, Aryl, Alkylaryl oder Arylalkyl,
R'' = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3, mit a+b = 1, 2 oder 3 .

Solche Silane sind z.B. in der DE 34 07 087 C2 beschrieben. Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Isocyanato, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Spezielle Beispiele für hydrolytisch kondensierbare Silane der allgemeinen Formel (III) sind:
$CH_3$-Si-$Cl_3$, $CH_3$-Si-$(OC_2H_5)_3$, $C_2H_5$-Si-$Cl_3$, $C_2H_5$-Si-$(OC_2H_5)_3$, $CH_2$=CH-Si-$(OC_2H_5)_3$, $CH_2$=CH-Si-$(OC_2H_4OCH_3)_3$, $(CH_3)_2$-Si-$Cl_2$, $CH_2$=CH-Si-$(OOCCH_3)_3$, $(CH_3)_2$-Si-$(OC_2H_5)_2$, $(C_2H_5)_3$-Si-Cl, $(C_2H_5)_2$-Si-$(OC_2H_5)_2$, $(CH_3)_2(CH_2$=CH)-

Si-$Cl_2$, $(CH_3)_3$-Si-Cl, (t-$C_4H_9$)$(CH_3)_2$-Si-Cl, $(CH_3O)_3$-Si-$C_3H_6$-NH-$C_2H_4$-NH-$C_2H_4$-$NH_2$, $(CH_3O)_3$-Si-$C_3H_6$-SH, $(CH_3O)_3$-Si-$C_3H_6$-NH-$C_2H_4$-$NH_2$, $(CH_3O)_3$-Si-$C_3H_6$-Cl, $(CH_3O)_3$-Si-$C_3H_6$-O-C(O)-C($CH_3$)=$CH_2$, $(CH_3)_2$($CH_2$=CH-$CH_2$)-Si-Cl, $(C_2H_5O)_3$-Si-$C_3H_6$-$NH_2$, $(C_2H_5O)_3$-Si-$C_3H_6$-CN,

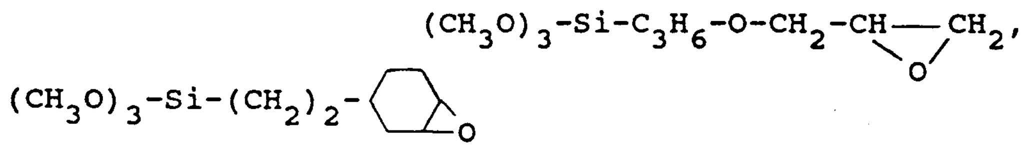

Unter den von Silanen der allgemeinen Formel (I) verschiedenen, hydrolytisch kondensierbaren Silicium-Verbindungen, die gegebenenfalls eingesetzt werden können, sind solche der allgemeinen Formel (IV) ebenfalls bevorzugt,

$$\{X_nR_kSi[R^2(A)_l]_{4-(n+k)}\}_xB \qquad (IV)$$

in der die Reste A, R, $R^2$ und X gleich oder verschieden sind und folgende Bedeutung haben.

A = O, S, PR', POR', NHC(O)O oder NHC(O)NR',
mit R' = Wasserstoff, Alkyl oder Aryl,
B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoff-Atomen ableitet,
mit R'= Wasserstoff, Alkyl oder Aryl,
R = Alkyl, Alkenyl, Aryl, Alkylaryl oder Arylalkyl,
$R^2$ = Alkylen, Arylen oder Alkylenarylen,
X = Wasserstoff, Halogen, Hydroxy, Alkoxy, Acyloxy, Alkylcarbonyl, Alkoxycarbonyl oder $NR'_2$,
mit R' = Wasserstoff, Alkyl oder Aryl,
n = 1, 2 oder 3,
k = 0, 1 oder 2,
l = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR' steht.

Solche Silane sind in der DE 40 11 044 und in der EP 91 105 355 beschrieben.

Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Isocyanato, Nitro, Epoxy, $SO_3H$ und $PO_4H_2$.

Unter den Halogenen sind Fluor, Chlor und Brom bevorzugt.

Der Rest B leitet sich von einer substituierten oder unsubstituierten Verbindung B' mit mindestens zwei C=C-Doppelbindungen ab, z.B. Vinyl-, Allyl-, Acryl- und/oder Methacrylat-Gruppen, und 5 bis 50, vorzugsweise 6 bis 30 Kohlenstoff-Atomen. Vorzugsweise leitet sich B ab, von einer substituierten oder unsubstituierten Verbindung B' mit zwei oder mehreren Acrylat- oder Methacrylat-Gruppen (derartige Verbindungen werden im folgenden als (Meth)acrylate bezeichnet).

Falls die Verbindung B' substituiert ist, können die Substituenten unter den oben genannten Substituenten ausgewählt sein.

Die erfindungsgemäßen Spiro-Silane müssen für die Weiterverarbeitung zu den Poly(herero)kondensaten nicht unbedingt extra isoliert werden. Es ist auch möglich, in einem Eintopf-Verfahren, diese Silane zunächst herzustellen und dann - gegebenenfalls nach Zusatz weiterer hydrolysierbarer Verbindungen - hydrolytisch zu kondensieren.

Unter den gegebenenfalls eingesetzten hydrolysierbaren Aluminium-Verbindungen sind diejenigen besonders bevorzugt, die die allgemeine Formel (V) aufweisen,

$$AlR°_3 \qquad (V)$$

in der die Reste R°, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Silicium-Verbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminium-Verbindungen sind die Aluminiumalkoxide und -halogenide. In diesem Zusammenhang können als konkrete Beispiele genannt werden
$Al(OCH_3)_3$, $Al(OC_2H_5)_3$, $Al(O\text{-}n\text{-}C_3H_7)_3$, $Al(O\text{-}i\text{-}C_3H_7)_3$, $Al(OC_4H_9)_3$, $Al(O\text{-}i\text{-}C_4H_9)_3$, $Al(O\text{-}s\text{-}C_4H_9)_3$, $AlCl_3$, $AlCl(OH)_2$.

Bei Raumtemperatur flüssige Verbindungen, wie z.B. Aluminium-sek-butylat und Aluminium-isopropylat, werden besonders bevorzugt.

Geeignete hydrolysierbare Titan- oder Zirkonium-Verbindungen, die gegebenenfalls eingesetzt werden können, sind solche der allgemeinen Formel (VI),

$$M\,X_yR_z \qquad (VI)$$

in der M Ti oder Zr bedeutet, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel (I) definiert sind. Dies gilt auch für die bevorzugten Bedeutungen. Besonders bevorzugt handelt es sich bei den Verbindungen der Formel (VI) um solche, in denen y gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure.

Konkrete Beispiele für einsetzbare Zr- und Ti-Verbindungen sind die folgenden:
$TiCl_4$, $Ti(OC_2H_5)_4$, $Ti(OC_3H_7)_4$, $Ti(O\text{-}i\text{-}C_3H_7)_4$, $Ti(OC_4H_9)_4$, Ti(2-ethylhexoxy)$_4$, $ZrCl_4$, $Zr(OC_2H_5)_4$, $Zr(OC_3H_7)_4$, $Zr(O\text{-}i\text{-}C_3H_7)_4$, $Zr(OC_4H_9)_4$, Zr(2-ethylhexoxy)$_4$, $ZrOCl_2$

Weitere hydrolysierbare Verbindungen, die zur Herstellung der Polyheterokondensate eingesetzt werden können, sind z.B. Bortrihalogenide und Borsäureester, wie z.B. $BCl_3$, $B(OCH_3)_3$ und $B(OC_2H_5)_3$, Zinntetrahalogenide und Zinntetraalkoxide, wie z.B. $SnCl_4$ und $Sn(OCH_3)_4$, und Vanadyl-Verbindungen, wie z.B. $VOCl_3$ und $VO(OCH_3)_3$.

Wie bereits erwähnt, kann die Herstellung der Poly(hetero)kondensate in auf diesem Gebiet üblicher Art und Weise erfolgen. Werden praktisch ausschließlich Silicium-Verbindungen eingesetzt, kann die hydrolytische Kondensation in den meisten Fällen dadurch erfolgen, daß man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit der reaktiven Verbindungen von Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingestzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylether, Dimethylformamid, Amine, insbesondere Triethylamin, und deren Gemische in Frage.

Bevorzugt wird die Hydrolyse in einem bzgl. der Spiro-Silane basischen Milieu durchgeführt. Dies wird entweder

durch ein basisches Lösungsmittel, wie z.B. durch Triethylamin, erzeugt, oder durch Zugabe von basichen Hydrolyse- und Kondensationskatalysatoren, wie z.B. von $NH_3$, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Poly(hetero)kondensat kann entweder als solches oder nach teilweiser oder nahezu vollständiger Entfernung des verwendeten Lösungsmittels weiterverarbeitet werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Poly(hetero)kondensat zu stabilisieren. Zu diesem Zweck kann die Reaktionsmischung z.B. im Vakuum bei leicht erhöhter Temperatur so weit eingedickt werden, daß sie noch problemlos mit einem anderen Lösungsmittel aufgenommen werden kann.

Sollen diese Poly(hetero)kondensate als Lacke für die Beschichtung (z.B. von Kunststoffen wie etwa PVC, PC, PMMA, PE, PS etc., von Glas, Papier, Holz, Keramik, Metall usw.) eingesetzt werden, so können diesen spätestens vor der Verwendung gegebenenfalls noch übliche Lackadditive zugegeben werden, wie z.B. Färbemittel (Pigmente oder Farbstoffe), Füllstoffe, Oxidationsinhibitoren, Verlaufmittel, UV-Absorber, Stabilisatoren oder dergleichen. Auch Zusätze zur Erhöhung der Leitfähigkeit (z.B. Graphit-Pulver, Silber-Pulver etc.) verdienen in diesem Zusammenhang Erwähnung. Im Falle der Verwendung als Formmasse kommt insbesondere die Zugabe von anorganischen und/oder organischen Füllstoffen in Frage, wie z.B. (Glas-)Fasern, Mineralien etc.

Die endgültige Härtung der Poly(hetero)kondensate erfolgt entweder thermisch oder photochemisch nach Zugabe geeigneter Initiatoren. Dabei werden im Zuge einer kationischen Polymerisation die Ringe der Spiro-Gruppen geöffnet und es wird das organische Netzwerk aufgebaut. Überraschenderweise wurde festgestellt, daß sich im Laufe dieser Polymerisation das Volumen der Poly(hetero)kondensate nicht oder nur geringfügig ändert. In Abhängigkeit von der Zahl der Spiro-Gruppen wird eine nur geringfügige Volumenabnahme, keine Volumenänderung oder sogar eine Volumenzunahme erhalten, wobei mit steigender Zahl der Spiro-Gruppen die Volumenabnahme geringer wird. Mit Hilfe der erfindungsgemäßen Spiro-Silane ist es also möglich geworden, Beschichtungen, Füll- und Formkörper sowie Klebe- und Dichtungsmassen auf der Basis von Kieselsäure(hetero)kondensaten zu erhalten, die bei der Härtung keinen Härtungsschrumpf erleiden.

Es ist aber auch möglich, dem Poly(hetero)kondensat vor der endgültigen Härtung, also vor der Polymerisation weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide oder Vinylether. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt die Härtung des Poly(hetero)kondensates photochemisch, so werden diesem kationische Photoinitiatoren zugesetzt. Geeignete Photoinitiatoren sind Verbindungen, die bei Bestrahlung Säuren freisetzen, wie z.B. $C_6H_5$-$N_2BF_4$, o-$NO_2$-$C_6H_4$-$CH_2$-O-$SO_2CF_3$, Triarylsulfoniumsalze der allgemeinen Formeln (VII), (VIII) und (IX), in denen die Reste Ar gleich oder verschieden sein können und Aryl bzw. Arylen, z.B. Phenyl und Phenylen, bedeuten, mit $X^-$ = $BF_4^-$, $AsF_6^-$, $PF_6^-$ oder $SbF_6^-$.

(VII) 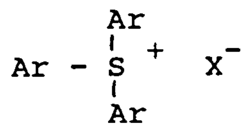 (VIII) 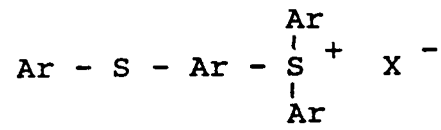

(IX) 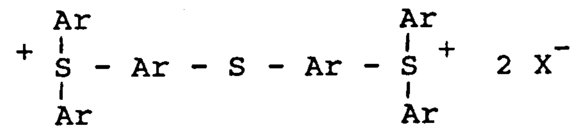

Diese Photoinotiatoren sind kommerziell erwerbbar. Z.B. von der Firma Union Carbide das Triphenylsulfoniumhexafluorophosphat als 50 %-ige Lösung in Propylencarbonat unter dem Handelsnamen UVI-6990, oder von der Firma Degussa KI-85 (Initiator gemäß Formel (IX) mit Ar = Phenyl bzw. Phenylen und $X^- = PF_6^-$ als 50 %-ige Lösung in Propylencarbonat). Prinzipiell sind aber alle Photoinitiatoren geeignet, die für die Polymerisation von Oxiran-haltigen Molekülen, wie z.B. cycloaliphatischen Epoxiden, eingesetzt werden.

Unter dem Einfluß der UV-Bestrahlung wird das Triarylsulfonium-Salz einer Photolyse unterzogen und es entsteht eine Broenstedsäure, welche die Ringöffnung der Spiro-Gruppen katalysiert, wobei das Poly(hetero)kondensat polymerisiert.

Erfolgt die Härtung des Poly(hetero)kondensates thermisch, so werden diesem thermische Initiatoren zugesetzt. Geeignete thermische Initiatoren sind z.B. $BF_3*H_2NC_2H_5$ oder $BF_3*Et_2O$, $ZnCl_2$, $TiCl_4$, $SnCl_2$, Carbonsäuren oder Carbonsäureanhydride. Auch hier können alle die thermischen Initiatoren eingesetzt werden, die für die Polymerisation von Epoxidgruppen geeignet sind.

Der Initiator kann in üblichen Mengen zugegeben werden. So kann z.B. einer Mischung, die 30 bis 50 Gew.-% Feststoff (Polykondensat) enthält, Initiator in einer Menge von z.B. 0.5 bis 5 Gew.-%, insbesondere von 1 bis 3 Gew.-%, bezogen auf die Mischung zugesetzt, werden.

Werden zur Herstellung der Poly(hetero)kondensate neben den erfindungsgemäßen Spiro-Silanen weitere Komponenten eingesetzt, die reaktive Doppelbindungen enthalten, wie z.B. die Silane gemäß der allgemeinen Formel (IV), so kann über diese Doppelbindungen ebenfalls eine Polymerisation ablaufen, die thermisch oder photochemisch initiiert werden kann.

Als Photoinitiatoren können z.B. die im Handel erhältlichen eingesetzt werden. Beispiel hierfür sind Iracure 184 (1-Hydroxycyclohexylphenylketon), Iracure 500 (1-Hydroxycyclohexylphenylketon/Benzophenon), und andere von Ciba-Geigy erhältliche Photoinitiatoren vom Iracure-Typ; Darocure 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4.4'-Dimethoxybenzoin etc.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Ein mit einem Initiator versehener Lack (Poly(hetero)kondensat) auf der Basis der erfindungsgemäßen Spiro-Silane kann dann für die Beschichtung von Substraten eingesetzt werden. Für diese Beschichtung können übliche Beschichtungsverfahren angewendet werden, z.B. Tauchen, Fluten, Gießen, Schleudern, Walzen, Spritzen, Aufstreichen, elektrostatisches Spritzen und Elektrotauchlackierung. Erwähnt werden soll hier noch, daß der Lack nicht notwendigerweise lösungsmittelhaltig sein muß. Insbesondere bei Verwendung von Ausgangssubstanzen (Silanen) mit zwei Alkoxy-Gruppen am Si-Atom kann auch ohne Zusatz von Lösungsmitteln gearbeitet werden.

Vor der Härtung wird der aufgetragene Lack vorzugsweise abtrocknen gelassen. Danach kann er, abhängig von der Art des Initiators thermisch oder photochemisch in an sich bekannter Weise gehärtet werden. Selbstverständlich sind auch Kombinationen von Aushärtungsmethoden möglich.

Erfolgt die Härtung des aufgetragenen Lackes durch Bestrahlen kann es sich von Vorteil erweisen, nach der Strahlungshärtung eine thermische Härtung durchzuführen, insbesondere um noch vorhandenes Lösungsmittel zu entfernen oder um noch weitere reaktive Gruppen in die Härtung miteinzubeziehen.

Obwohl in den Poly(hetero)kondensaten auf der Basis der erfindungsgemäßen Spiro-Silane bereits polymerisierbare Gruppen vorhanden sind, kann es sich in bestimmten Fällen als vorteilhaft erweisen, diesen Kondensaten vor oder bei ihrer Weiterverarbeitung (Härtung) noch weitere Verbindungen (vorzugsweise rein organischer Natur) mit ungesättigten Gruppen zuzugeben. Bevorzugte Beispiele für derartige Verbindungen sind Acrylsäure und Methacrylsäure sowie davon abgeleitete Verbindungen, insbesondere Ester von vorzugsweise einwertigen Alkoholen (z.B. $C_{1-4}$-Alkanolen), (Meth)acrylnitril, Styrol und Mischungen derselben. Im Fall der Verwendung der Poly(hetero)kondensate zur Herstellung eines Beschichtungslackes können derartige Verbindungen gleichzeitig als Lösungs- bzw. Verdünnungsmittel wirken.

Die Herstellung von Formkörpern bzw. Formmassen aus Poly(hetero)kondensaten auf der Basis der erfindungsgemäßen Spiro-Silane kann mit jeder auf diesem Gebiet gebräuchlichen Methode erfolgen, z.B. durch Spritzguß, Formgießen, Extrusion etc. Auch zur Herstellung von Kompositmaterialien (z.B. mit Glasfaserverstärkung) sind die Poly(hetero)kondensate auf der Basis der erfindungsgemäßen Spiro-Silane geeignet.

Eine weitere Anwendungsmöglichkeit finden die erfindungsgemäßen Spiro-Silane bei der Herstellung von hydrolytisch kondensierbaren Polymerisaten. Dazu werden die erfindungsgemäßen Spiro-Silane alleine oder zusammen mit anderen radikalisch und/oder ionisch polymerisierbaren Komponenten polymerisiert, wobei die endgültige Härtung dann durch hydrolytische Kondensation über die hydrolysierbaren Gruppen der erfindungsgemäßen Spiro-Silane und eventuell weiterer, hydrolysierbarer Komponenten erfolgt. In diesem Fall wird zuerst durch Polymerisation das organische Netzwerk aufgebaut und dann durch hydrolytische Kondensation das anorganische.

Die Herstellung der Polymerisate erfolgt durch kationische Polymerisation einer oder mehrerer 1,4,6-Trioxaspiro-[4,4]-nonan-haltiger Verbindungen und gegebenenfalls anderer, kationisch polymerisierbarer Verbindungen, und gegebenenfalls durch radikalische Polymerisation einer oder mehrerer radikalisch polymerisierbaren Verbindungen, durch Einwirkung von Wärme oder elektromagnetischer Strahlung, gegebenenfalls in Anwesenheit eines oder mehrerer Initiatoren und/oder eines Lösungsmittels, und ist dadurch gekennzeichnet, daß 5 bis 100 Molprozent, auf der Basis monomerer Verbindungen, der 1,4,6-Trioxaspiro-[4,4]-nonan-haltigen Verbindungen aus den erfindungsgemäßen Silanen der allgemeinen Formel (I) ausgewählt werden.

Es ist aber auch möglich, den erfindungsgemäßen Spiro-Silanen vor der Polymerisation weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Vinylether, Spiroorthocarbonate, bicyclische Spiroorthoester, Mono- oder Oligoepoxide. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Ferner können den erfindungsgemäßen Spiro-Silanen vor der Polymerisation weitere hydrolysierbare und polymerisierbare Verbindungen des Siliciums zugesetzt werden, gegebenenfalls in vorkondensierter Form, die dann mit einpolymerisiert werden. Solche Silicium-Verbindungen leiten sich z.B. von Epoxid-haltigen Silanen ab, sind deshalb kationisch polymerisierbar und werden u.a. für die Herstellung der erfindungsgemäßen Spiro-Silane eingesetzt. Diese Systeme sind bereits bei der Herstellung der erfindungsgemäßen Spiro-Silane beschrieben.

Es können aber auch Silicium-Verbindungen eingesetzt werden, die sich z.B. von solchen der allgemeinen Formel (IV) ableiten und radikalisch polymerisierbar sind. Diese Systeme sind bei der Herstellung der Poly(hetero)kondensate bereits näher beschrieben worden.

Die Polymerisation erfolgt entweder thermisch oder photochemisch nach Zugabe geeigneter Initiatoren. Dabei werden im Zuge einer kationischen Polymerisation die Ringe der Spiro-Gruppen und gegebenenfalls weitere ionisch polymerisierbare Ringe geöffnet, und gegebenenfalls erfolgt auch eine radikalische Polymerisation durch Verknüpfung von Doppelbindungen. Dabei wird das organische Netzwerk aufgebaut. Überraschenderweise wurde festgestellt, daß sich im Laufe dieser Polymerisation das Volumen der Reaktionsmasse nicht oder nur geringfügig ändert. In Abhängigkeit von der Zahl der Spiro-Gruppen wird eine nur geringfügige Volumenabnahme, keine Volumenänderung oder sogar eine Volumenzunahme erhalten, wobei mit steigender Zahl der Spiro-Gruppen die Volumenabnahme geringer wird.

Erfolgt die Polymerisation photochemisch, so werden der Reaktionsmasse kationische Photoinitiatoren zugesetzt. Geeignete Photoinitiatoren sind Verbindungen, die bei Bestrahlung Säuren freisetzen, und die bereits bei der photochemischen Härtung der Poly(hetero)kondensate ausführlich beschrieben wurden.

Erfolgt die Polymerisation thermisch, so werden der Reaktionsmasse thermische Initiatoren zugesetzt. Geeignete thermische Initiatoren sind z.B. $BF_3$ als $BF_3 \cdot H_2NC_2H_5$, $ZnCl_2$, $TiCl_4$ oder $SnCl_4$. Auch hier können alle die thermischen Initiatoren eingesetzt werden, die für die Polymerisation von Epoxidgruppen geeignet sind.

Wurden den erfindungsgemäßen Spiro-Silanen Komponenten mit Doppelbindungen zugesetzt, so kann über diese ebenfalls eine Polymerisation ablaufen, die thermisch oder photochemisch initiierbar ist.

Als Photoinitiatoren hierfür können z.B. die im Handel erhältlichen eingesetzt werden. Beispiel dazu wurden bereits bei der Härtung der Poly(hetero)kondensate genannt. Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele hierfür wurden ebenfalls bereits bei der Härtung der Poly(hetero)kondensate genannt.

Der Initiator kann in üblichen Mengen zugegeben werden. So kann z.B. einer Mischung, die 30 bis 50 Gew.-% Feststoff (Polykondensat) enthält, Initiator in einer Menge von z.B. 0.5 bis 5 Gew.-%, insbesondere von 1 bis 3 Gew.-%, bezogen auf die Mischung zugesetzt, werden.

Das auf diese Weise erhaltene Polymerisat kann man nun zum Aufbau des anorganischen Netzwerkes, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Lösungsmittels, hydrolytisch kondensieren.

Im Gegensatz zur hydrolytischen Kondensation der erfindungsgemäßen Spiro-Silane kann die hydrolytische Kondensation des Polymerisates auch im sauren Milieu durchgeführt werden. Die Polymerisate enthalten hydrolysierbare Gruppen X, z.B. Alkoxy-Gruppen, so daß damit ein anorganisches Netzwerk (Si-O-Si-Einheiten) aufgebaut werden kann.

Unter den gegebenenfalls eingesetzten hydrolysierbaren Verbindungen des Siliciums sind solche der allgemeinen Formel (III), gegebenenfalls in vorkondensierter Form, bevorzugt. Diese Systeme wurden bereits bei der Herstellung der Poly(hetero)kondensate ausführlich beschrieben und mit konkreten Beispielen belegt.

Unter den gegebenenfalls eingesetzten hydrolysierbaren Aluminium-Verbindungen sind diejenigen besonders bevorzugt, die die allgemeine Formel (V) aufweisen, und geeignete hydrolysierbare Titan- oder Zirkonium-Verbindungen, die gegebenenfalls eingesetzt werden können, sind solche der allgemeinen Formel (VI). Auch diese Systeme wurden bereits bei der Herstellung der Poly(hetero)kondensate ausführlich abgehandelt.

Weitere hydrolysierbare Verbindungen, die dem Polymerisat zugesetzt werden können, sind z.B. Bortrihalogenide und Borsäureester, wie z.B. $BCl_3$, $B(OCH_3)_3$ und $B(OC_2H_5)_3$, Zinntetrahalogenide und Zinntetraalkoxide, wie z.B. $SnCl_4$ und $Sn(OCH_3)_4$, und Vanadyl-Verbindungen, wie z.B. $VOCl_3$ und $VO(OCH_3)_3$.

Auch hier kann, wie bereits erwähnt, die hydrolytische Kondensation in auf diesem Gebiet üblicher Art und Weise erfolgen. Die hydrolytische Kondensation kann in den meisten Fällen dadurch erfolgen, daß man dem zu hydrolysierenden Polymerisat, das entweder als solches oder gelöst in einem geeigneten Lösungsmittel vorliegt, das erforderliche Wasser bei Raumtemperatur oder unter leichter Kühlung direkt zugibt, vorzugsweise unter Rühren und in Anwesenheit eines Hydrolyse- und Kondensationskatalysators.

Bei Anwesenheit der reaktiven Verbindungen von Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingestzten Ausgangsverbindungen ab. So kann man z.B. das gelöste Polymerisat langsam zu einem Überschuß an Wasser tropfen oder man gibt Wasser in einer Portion oder portionsweise dem gegebenenfalls gelösten Polymerisat zu. Es kann auch nützlich sein, das Wasser nicht als solches zuzugeben, sondern mit Hilfe von wasserhaltigen organischen oder anorganischen Systemen in das Reaktionssystem einzutragen.

An Hand von Ausführungsbeispielen wird die Erfindung näher erläutert.

**Beispiel 1:**

Darstellung des 2-Trimethoxysilylpropylmethylether-1.4.6-trioxaspiro-[4.4]-nonan

Zur Vorlage von 129 g (1.5 mol) -Butyrolacton und 4.62 g Bortrifluoridetherat ($BF_3 \cdot Et_2O$) in 600 ml getrocknetem $CH_2Cl_2$ wird bei Raumtemperatur unter Argonatmospäre eine Lösung von 307 g (1.3 mol) 3-Glycidyloxypropyltrimethoxysilan in 300 ml $CH_2Cl_2$ innerhalb einer Stunde zugetropft. Nach etwa 2-stündigem Rühren bei Raumtemperatur wird am Rotationsverdampfer eingeengt und der Rückstand einer Hochvakuumdestillation unterzogen. Nach einer Vorfraktion wird das gewünschte Spiro-Silan bei einer Temperatur von ca. 125 °C ($2 \cdot 10^{-2}$ mbar) als farblose, stabile Flüssigkeit erhalten.

IR: (C-H) bei ca. 2840 - 2969 $cm^{-1}$
(C-H, Methoxy) bei 2480 $cm^{-1}$

**Beispiel 2:**

Hydrolytische Kondensation des 2-Trimethoxysilylpropylmethylether-1.4.6-trioxaspiro-[4.4]-nonan

Zur Hydrolyse und Kondensation der $-Si(OCH_3)_3$-Gruppen werden zu 6.54 g (20 mol) Spiro-Silan gemäß dem Beispiel 1 20 mg Triethylamin und 0.54 g (30 mol) $H_2O$ zugetropft. Das Gemisch wird ca. 20 h bei Raumtemperatur gerührt. Das resultierende Spiro-Siloxan kann einerseits direkt zur kationischen Polymerisation eingesetzt werden und andererseits nach üblicher Aufarbeitung isoliert werden.

IR: (C-H, Methoxy) bei 2480 $cm^{-1}$ nicht mehr vorhanden
-> Hydrolyse ist erfolgt
(C=O, Ester bei 1738 $cm^{-1}$ nicht entstanden
-> Spiro-Gruppe nicht gespalten

**Beispiel 3:**

Kationische Polymerisation des Spiro-Siloxans aus Beispiel 2

Das Spiro-Siloxan gemäß Beispiel 2 wird mit 2 % Starter (UVI-6990 von Union Carbide) versetzt, auf KBr-Plättchen aufgetragen, im Vakuum von allen flüchtigen Betsandteilen befreit und mit UV-Licht betrahlt (UV-Punktstrahler "Blue Point" der Fa. Dr.K.Hönle), d.h. polymerisierend gehärtet (vollständiger Umsatz nach < 1 min).

IR: (C=O, Ester) bei 1740 $cm^{-1}$ (intensive Bande)
-> vollständiger Umsatz und somit Polymerisation der Spiro-Gruppe
-> Polyestersiloxan

**Beispiel 4:**

Kationische Polymerisation des Spiro-Siloxans aus Beispiel 2

Das Spiro-Siloxan gemäß Beispiel 2 wird mit 2 % Starter (KI-85 von Degussa) versetzt und auf Glasobjektträger aufgetragen. Zum Auftragen wird ein Filmziehrahmen mit verschiedenen Spaltbreiten (30 bzw. 80 µm) verwendet. Die flüchtigen Bestandteile werden im Vakuumtrockenschrank (15 min, 40 °C) abgezogen, und die Härtung erfolgt mittels UV-Strahler "UVALOC 1000" der Fa. Loctite.

Mit den Startern gemäß Beispiel 3 und 4 werden nach Belichtungszeiten von weniger als einer Minute harte, farblose Beschichtungen erhalten.

Hinweis: Da im Spiro-Silan 3 Methoxy-Gruppen enthalten sind, wird bei der hydrolytischen Kondensation eine farblose, plastische Masse erhalten, die sich in Essigester löst. Bei Einsatz eines Spiro-Silans mit 2 Alkoxy-Gruppen ist ein flüssiges Harz zu erwarten.

**Patentansprüche**

1. Hydrolysierbare und polymerisierbare Silane der allgemeinen Formel (I),

$$Y_n\ Si\ X_m\ R_{4-(n+m)} \qquad (I)$$

in der die Reste X, Y und R gleich oder verschieden sind und folgende Bedeutung haben:

R = Alkyl, Alkenyl, Aryl, Alkylaryl oder Arylalkyl, mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$;

X = Wasserstoff, Halogen, Hydroxy, Alkoxy, Acyloxy, Alkylcarbonyl, Alkoxycarbonyl oder $NR'_2$, mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$, und mit R' = Wasserstoff, Alkyl oder Aryl;

Y = ein Substituent, der einen substituierten oder unsubstituierten 1,4,6-Trioxaspiro-[4,4]-nonan-Rest enthält, der über Alkylen- oder Alkenylengruppen an das Si-Atom gebunden ist und der gegebenenfalls mit Hydroxyl-, Alkyl-, Alkenyl-, Aryl-, Alkylaryl-, Arylalkyl-, Alkylcarbonyl-, Alkoxycarbonyl-, Acryloxy- oder Methacryloxygruppen substituiert sein kann;

n = 1, 2 oder 3;

m = 1, 2 oder 3, mit $n+m \leq 4$ .

**2.** Silane nach Anspruch 1, **dadurch gekennzeichnet**, daß Y

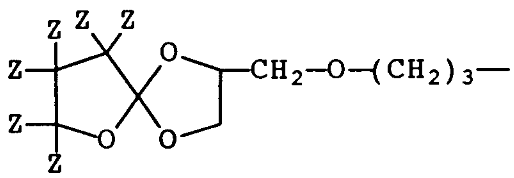
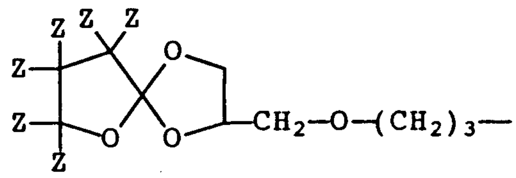
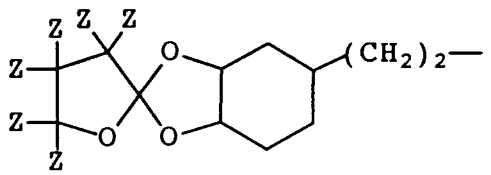
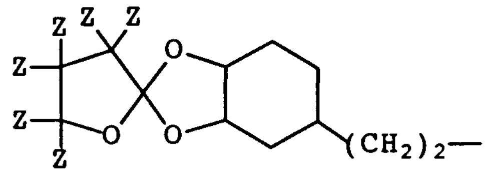
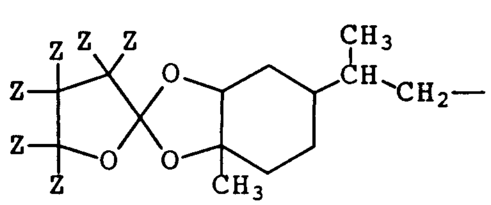

oder

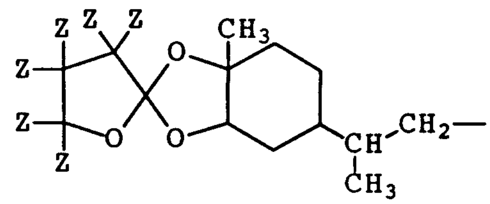

ist, wobei die Reste Z gleich oder verschieden sind und Wasserstoff, Hydroxyl, Alkyl, Alkenyl, Aryl, Alkylaryl, Arylalkyl, Alkylcarbonyl oder Alkoxycarbonyl bedeuten und wobei geminale Hydroxylgruppen nicht vorhanden sind.

**3.** Verfahren zur Herstellung der Silane nach Anspruch 1, **dadurch gekennzeichnet**, daß man ein Silan der allgemeinen Formel (II)

$$Y'_n \, Si \, X_m \, R_{4-(n+m)} \qquad (II)$$

in der die Reste X, Y' und R gleich oder verschieden sind, X, R, n und m die in Anspruch 1 genannte Bedeutung haben, und Y' einen Rest darstellt, der einen substituierten Oxiran-Ring enthält,
mit einem substituierten oder unsubstituierten γ-Butyrolacton in Anwesenheit einer Lewis-Säure umsetzt.

**4.** Verfahren nach Anspruch 3, **dadurch gekennzeichnet**, daß man als Silan der allgemeinen Formel (II) 3-Glycidoxypropyldimethylethoxysilan, (3-Glycidoxypropyl)methyldiethoxysilan, 3-Glycidoxypropylmethyl-di-isopropenoxysilan, (3-Glycidoxypropyl)trimethoxysilan, 2-(3.4-Epoxycyclohexyl)ethyltrimethoxysilan oder [2-(3.4-Epoxy-4-methylcyclohexyl)propyl]-methyldiethoxysilan einsetzt.

**5.** Verfahren zur Herstellung von Kieselsäurepolykondensaten oder von Kieselsäureheteropolykondensaten durch hydrolytische Kondensation von einer oder mehreren hydrolytisch kondensierbaren Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit, **dadurch gekennzeichnet**, daß 5 bis 100 Molprozent, auf der Basis monomerer Verbindungen, der hydrolytisch kondensierbaren Verbindungen aus Silanen der allgemeinen Formel (I) ausgewählt werden,

$$Y_n \, Si \, X_m \, R_{4-(n+m)} \qquad (I)$$

in der die Reste X, Y und R gleich oder verschieden sind und folgende Bedeutung haben:

R = Alkyl, Alkenyl, Aryl, Alkylaryl oder Arylalkyl,
mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$;

X = Wasserstoff, Halogen, Hydroxy, Alkoxy, Acyloxy, Alkylcarbonyl, Alkoxycarbonyl oder $NR'_2$, mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$, und
mit R' = Wasserstoff, Alkyl oder Aryl;
Y = ein Substituent, der einen substituierten oder unsubstituierten 1,4,6-Trioxaspiro-[4,4]-nonan-Rest enthält, der über Alkylen- oder Alkenylengruppen an das Si-Atom gebunden ist und der gegebenenfalls mit Hydroxyl-, Alkyl-, Alkenyl-, Aryl-, Alkylaryl-, Arylalkyl-, Alkylcarbonyl-, Alkoxycarbonyl-, Acryloxy- oder Methacryloxygruppen substituiert sein kann;
n = 1, 2 oder 3,
m = 1, 2 oder 3, mit $n+m \leq 4$ .

6. Verfahren nach Anspruch 5, **dadurch gekennzeichnet**, daß man als weitere hydrolytisch kondensierbare Verbindungen solche Verbindungen einsetzt, gegebenenfalls in vorkondensierter Form, die radikalisch oder kationisch polymerisierbar sind.

7. Verfahren nach Anspruch 5 oder 6, **dadurch gekennzeichnet**, daß man als weitere hydrolytisch kondensierbare Verbindungen des Siliciums eine oder mehrere Verbindungen der allgemeinen Formel (III), gegebenenfalls in vorkondensierter Form, einsetzt,

$$R_a(R''Z')_bSiX_{4-(a+b)} \qquad (III)$$

in der die Reste R,R'' und Z' gleich oder verschieden sind und folgende Bedeutung haben:

R = Alkyl, Alkenyl, Aryl, Alkylaryl oder Arylalkyl,
R'' = Alkylen oder Alkenylen, wobei diese Reste durch Sauerstoff- oder Schwefelatome oder - NH-Gruppen unterbrochen sein können,
X = Wasserstoff, Halogen, Hydroxy, Alkoxy, Acyloxy, Alkylcarbonyl, Alkoxycarbonyl oder $NR'_2$,
mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3, mit a+b = 1,2 oder 3 .

8. Verfahren nach einem oder mehreren der Ansprüche 5 bis 7, **dadurch gekennzeichnet**, daß man als weitere hydrolytisch kondensierbare Verbindungen des Siliciums, eine oder mehrere Verbindungen der allgemeinen Formel (IV), gegebenenfalls in vorkondensierter Form, einsetzt,

$$\{X_nR_kSi[R^2(A)_l]_{4-(n+k)}\}_xB \qquad (IV)$$

in der die Reste A, R, $R^2$ und X gleich oder verschieden sind und folgende Bedeutung haben.

A = O, S, PR', POR', oder NHC(O)O,
mit R' = Wasserstoff, Alkyl oder Aryl,
B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoff-Atomen ableitet,
mit R'= Wasserstoff, Alkyl oder Aryl,
R = Alkyl, Alkenyl, Aryl, Alkylaryl oder Arylalkyl,
$R^2$ = Alkylen, Arylen oder Alkylenarylen,
X = Wasserstoff, Halogen, Hydroxy, Alkoxy, Acyloxy, Alkylcarbonyl, Alkoxycarbonyl oder $NR'_2$,
mit R' = Wasserstoff, Alkyl oder Aryl,
n = 1, 2 oder 3,
k = 0, 1 oder 2,
l = 0 oder 1,

x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR' steht.

**9.** Verfahren nach Anspruch 8, **dadurch gekennzeichnet**, daß man eine Verbindung der allgemeinen Formel (IV) einsetzt, in der sich der Rest B von einer substituierten oder unsubstituierten Verbindung B' mit zwei oder mehreren Acrylat- und/oder Methacrylat-Gruppen ableitet.

**10.** Verfahren nach einem oder mehreren der Ansprüche 5 bis 9, **dadurch gekennzeichnet**, daß man als weitere hydrolytisch kondensierbare Komponente eine oder mehrere, im Reaktionsmedium lösliche Aluminium, Titan- oder Zirkon-Verbindungen, gegebenenfalls in vorkondensierter Form, der allgemeinen Formel

$$AlR°_3 \text{ oder } M\, X_y\, R_z$$

einsetzt, in der M Titan oder Zirkon bedeutet, die Reste R°, R und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel (I) definiert sind.

**11.** Verfahren nach einem oder mehreren der Ansprüche 5 bis 10, **dadurch gekennzeichnet**, daß man dem Polykondensat einen oder mehrere Initiatoren zusetzt und das Polykondensat thermisch oder photochemisch härtet.

**12.** Verfahren nach einem oder mehreren der Ansprüche 5 bis 11, **dadurch gekennzeichnet**, daß man dem Polykondensat vor der Polymerisation eine oder mehrere radikalisch und/oder kationisch polymerisierbare Komponenten zusetzt.

**13.** Verfahren zur Herstellung von Polymerisaten durch kationische Polymerisation einer oder mehrerer 1,4,6-Trioxaspiro-[4,4]-nonan-haltigen Verbindungen und gegebenenfalls anderer, kationisch polymerisierbaren Verbindungen, und gegebenenfalls durch radikalische Polymerisation einer oder mehrerer radikalisch polymerisierbaren Verbindungen, durch Einwirkung von Wärme oder elektromagnetischer Strahlung, gegebenenfalls in Anwesenheit eines oder mehrerer Initiatoren und/oder eines Lösungsmittels, **dadurch gekennzeichnet**, daß 5 bis 100 Molprozent, auf der Basis monomerer Verbindungen, der 1,4,6-Trioxaspiro-[4,4]-nonan-haltigen Verbindungen aus Silanen der allgemeinen Formel (I) ausgewählt werden,

$$Y_n\, Si\, X_m\, R_{4-(n+m)} \qquad (I)$$

in der die Reste X, Y und R gleich oder verschieden sind und folgende Bedeutung haben:

R = Alkyl, Alkenyl, Aryl, Alkylaryl oder Arylalkyl, mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$;

X = Wasserstoff, Halogen, Hydroxy, Alkoxy, Acyloxy, Alkylcarbonyl, Alkoxycarbonyl oder $NR'_2$, mit gegebenenfalls einem oder mehreren Substituenten aus der Gruppe Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$, und mit R' = Wasserstoff, Alkyl oder Aryl;

Y = ein Substituent, der einen substituierten oder unsubstituierten 1,4,6-Trioxaspiro-[4,4]-nonan-Rest enthält, der über Alkylen- oder Alkenylengruppen an das Si-Atom gebunden ist und der gegebenenfalls mit Hydroxyl-, Alkyl-, Alkenyl-, Aryl-, Alkylaryl-, Arylalkyl-, Alkylcarbonyl-, Alkoxycarbonyl-, Acryloxy- oder Methacryloxygruppen substituiert sein kann;

n = 1, 2 oder 3,

m = 1, 2 oder 3, mit $n+m \leq 4$.

**14.** Verfahren nach Anspruch 13, **dadurch gekennzeichnet**, daß man als weitere kationisch polymerisierbare Verbindungen einen oder mehrere Spiroorthoester, Spiroorthocarbonate, bicyclische Spiroorthoester, Methacryloyl-Spiroorthoester, Mono- oder Oligoepoxide einsetzt.

**15.** Verfahren nach Anspruch 13 oder 14, **dadurch gekennzeichnet**, daß man als radikalisch polymerisierbare Verbindungen eine oder mehrere Verbindungen der allgemeinen Formel (IV) einsetzt,

$$\{X_nR_kSi[R^2(A)_l]_{4-(n+k)}\}_xB \qquad (IV)$$

in der die Reste A, R, $R^2$ und X gleich oder verschieden sind und A, R, $R^2$, X, k, l, n und x die in Anspruch 8 genannte Bedeutung haben.

**16.** Verfahren nach einem oder mehreren der Ansprüche 13 bis 15, **dadurch gekennzeichnet**, daß man das Polymerisat, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Losungsmittels, hydrolytisch kondensiert.

**17.** Verfahren nach Anspruch 16, **dadurch gekennzeichnet**, daß man als weitere kondensierbare Verbindungen des Siliciums eine oder mehrere Verbindungen der allgemeinen Formel (III), gegebenenfalls in vorkondensierter Form, einsetzt,

$$R_a(R''Z')_bSiX_{4-(a+b)} \qquad (III)$$

in der die Reste R,R'' und Z' gleich oder verschieden sind, und R, R'', Z', a und b die in Anspruch 7 genannte Bedeutung haben.

## Claims

**1.** Hydrolysable and polymerisable silanes of the general formula (I)

$$Y_n\ Si\ X_m\ R_{4-(n+m)} \qquad (I)$$

in which the radicals X, Y and R are the same or different and relate to the following:

R = alkyl, aklenyl, aryl, alkylaryl or arylalkyl,
optionally with one or more substituents from the halogen, alkyl, hydroxyalkyl, alkoxy, aryl, aryloxy, alkylcarbonyl, alkoxycarbonyl, furfuryl, tetrahydrofurfuryl, amino, alkyl amino, dialkyl amino, trialkyl ammonium, amido, hydroxy, formyl carboxy, mercapto, cyano, nitro, epoxy, $SO_3H$ and $PO_4H_2$ group;

X = hydrogen, halogen, hydroxy, alkoxy, acyloxy, alkylcarbonyl, alkoxycarbonyl or $NR'_2$,
optionally with one or more substituents from the halogen, alkyl, hydroxyalkyl, alkoxy, aryl, aryloxy, alkylcarbonyl, alkoxycarbonyl, furfuryl, tetrahydrofurfuryl, amino, alkyl amino, dialkyl amino, trialkyl ammonium, amido, hydroxy, formyl, carboxy, mercapto, cyano, nitro, epoxy, $SO_3H$ and $PO_4H_2$ group, and with R' = hydrogen, alkyl or aryl;

Y = a substituent containing a substituted or non-substituted 1,4,6-trioxaspiro-[4,4]-nonane radical which is bound to the Si atom via alkylene or alkenylene groups, and can optionally be substituted by hydroxyl, alkyl, alkenyl, aryl, alkylaryl, arylalkyl, alkylcarbonyl, alkoxycarbonyl, acryloxy or methacryloxy groups;

n = 1, 2 or 3;

m = 1, 2 or 3, with $n+m \leqq 4$.

**2.** Silanes according to Claim 1, characterised in that Y is

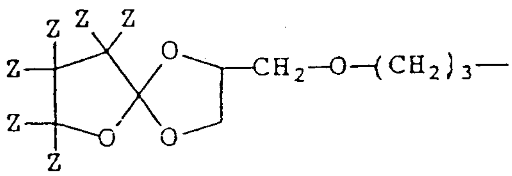

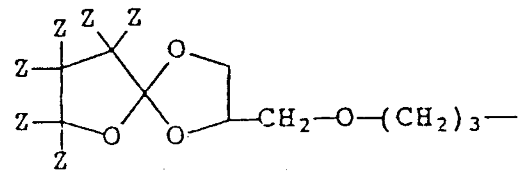

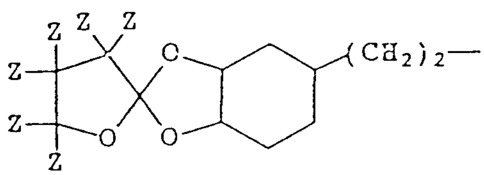

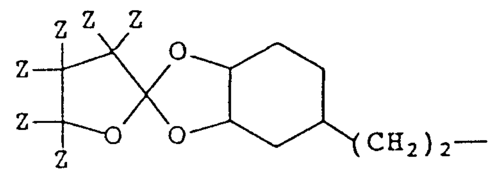

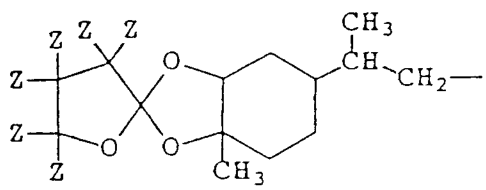

or

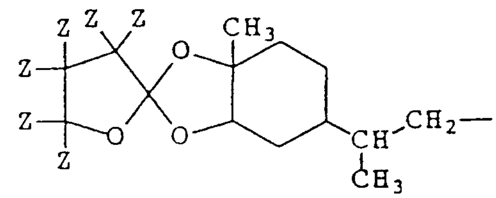

wherein the radicals Z are the same or different and relate to hydrogen, hydroxyl, alkyl, alkenyl, aryl, alkylaryl, arylalkyl, alkylcarbonyl or alkoxycarbonyl, and where geminal hydroxyl groups are not present.

**3.** Process for the production of the silanes according to Claim 1, characterised in that a silane of the general formula (II)

$$Y'_n\ Si\ X_m\ R_{4-(n+m)} \qquad (II)$$

in which the radicals X, Y' and R are the same or different, X, R, n and m relate to the same as specified in Claim 1, and Y' represents a radical containing a substituted oxirane ring,
is converted with a substituted or non-substituted γ-butyrolactone in the presence of a Lewis acid.

**4.** Process according to Claim 3, characterised in that the silane of the general formula (II) used is 3-glycidoxypropyldimethyl ethoxysilane, (3-glycidoxypropyl)methyl diethoxysilane, 3-glycidoxypropylmethyl-di-isopropene oxysilane, (3-glycidoxypropyl)trimethoxy silane, 2-(3.4-epoxycyclohexyl)ethyl trimethoxysilane or [2-(3.4-epoxy-4-methylcyclohexyl)propyl]-methyl diethoxysilane.

**5.** Process for the production of silicic acid polycondensates or silicic acid hetero-polycondensates by hydrolytic condensation of one or more hydrolytically condensable compounds of silicon and optionally of other elements from the group B, Al, P, Sn, Pb, the transition metals, lanthanides and actinides, and/or pre-condensates derived from the above-mentioned compounds, optionally in the presence of a catalyst and/or a solvent, by the action of water or moisture, characterised in that 5 to 100% mol, on the basis of monomer compounds, of the hydrolytically condensable compounds are selected from silanes of the general formula (I)

$$Y_n\ Si\ X_m\ R_{4-(n+m)} \qquad (I)$$

in which the radicals X, Y and R are the same or different and relate to the following:

R = alkyl, aklenyl, aryl, alkylaryl or arylalkyl,
optionally with one or more substituents from the halogen, alkyl, hydroxyalkyl, alkoxy, aryl, aryloxy, alkylcarbonyl, alkoxycarbonyl, furfuryl, tetrahydrofurfuryl, amino, alkyl amino, dialkyl amino, trialkyl ammonium, amido, hydroxy, formyl, carboxy, mercapto, cyano, nitro, epoxy, $SO_3H$ and $PO_4H_2$ group;

X = hydrogen, halogen, hydroxy, alkoxy, acyloxy, alkylcarbonyl, alkoxycarbonyl or $NR'_2$,
optionally with one or more substituents from the halogen, alkyl, hydroxyalkyl, alkoxy, aryl, aryloxy, alkylcarbonyl, alkoxycarbonyl, furfuryl, tetrahydrofurfuryl, amino, alkyl amino, dialkyl amino, trialkyl ammonium, amido, hydroxy, formyl, carboxy, mercapto, cyano, nitro, epoxy, $SO_3H$ and $PO_4H_2$ group, and with R' = hydrogen, alkyl or aryl;

Y = a substituent containing a substituted or non-substituted 1,4,6-trioxaspiro-[4,4]-nonane radical which is bound to the Si atom via alkylene or alkenylene groups, and can optionally be substituted by hydroxyl, alkyl, alkenyl, aryl, alkylaryl, arylakyl, alkylcarbonyl, alkoxycarbonyl, acryloxy or methacryloxy groups;

n = 1, 2 or 3;

m = 1, 2 or 3, with $n+m \leq 4$.

**6.** Process according to Claim 5, characterised in that those compounds, optionally in pre-condensed form, which may be polymerised radically or cationically, are used as further hydrolytically condensable compounds.

**7.** Process according to Claim 5 or 6, characterised in that one or more compounds of the general formula (III), optionally in pre-condensed form, are used as further hydrolytically condensable compounds of silicon

$$R_a\,(R''Z')_bSiX_{4-(a+b)} \qquad \text{(III)}$$

in which the radicals R, R'' and Z' are the same or different and relate to the following:

R = alkyl, alkenyl, aryl, alkylaryl or arylalkyl,

R'' = alkylene or alkenylene, where these radicals can be broken by oxygen or sulphur atoms or NH-groups,

X = hydrogen, halogen, hydroxy, alkoxy, acyloxy, alkylcarbonyl, alkoxycarbonyl or $NR'_2$, with R' = hydrogen, alkyl or aryl;

Z' = halogen or an optionally substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group,

a = 0, 1, 2 or 3,

b = 0, 1, 2 or 3, with a+b = 1, 2 or 3 .

**8.** Process according to one or more of Claims 5 to 7, characterised in that one or more compounds of the general formula (IV), optionally in pre-condensed form, are used as further hydrolytically condensable compounds of silicon

$$\{X_nR_kSi[R^2(A)_l]_{4-(n+k)}\}_xB \qquad \text{(IV)}$$

in which the radicals A, R, $R^2$ and X are the same or different and relate to the following:

A = O, S, PR', POR', or NHC(O)O, with R' = hydrogen, alkyl or aryl,

B = straight-chain or branched organic radical, derived from a compound B' with at least one (for 1 = 1 and A = NHC(O)O or NHC(O)NR') or at least two C=C double bonds and 5 to 50 carbon atoms, with R' = hydrogen, alkyl or aryl,

R = alkyl, alkenyl, aryl, alkylaryl or arylalkyl,

$R^2$ = alkylene, arylene or alkylene arylene,

X = hydrogen, halogen, hydroxy, alkoxy, acyloxy, alkylcarbonyl, alkoxycarbonyl or $NR'_2$, with R' = hydrogen, alkyl or aryl,

n = 1, 2 or 3,

k = 0, 1 or 2,

l = 0 or 1,

x = a whole number, the maximum value of which corresponds to the number of double bonds in the compound B' minus 1, or is equal to the number of double bonds in the compound B', when 1 = 1 and A stands for NHC(O)O or NHC(O)NR'.

**9.** Process according to Claim 8, characterised in that a compound of the general formula (IV) is used, in which the radical B is derived from a substituted or non-substituted compound B' with two or more acrylate and/or methacrylate groups.

**10.** Process according to one or more of Claims 5 to 9, characterised in that one or more aluminium, titanium or zirconium compounds soluble in the reaction medium, of the following general formula, optionally in pre-condensed form, are used as further hydrolytically condensable components

$$AlR°_3 \text{ or } M\,X_y\,R_z$$

in which M is titanium or zirconium, the radicals R°, R and X are the same or different, R° represents halogen, hydroxy, alkoxy or acyloxy, y is a whole number from 1 to 4, in particular 2 to 4, z stands for 0, 1, 2 or 3, preferably 0, 1 or 2, and X and R are defined as in the case of general formula (I).

**11.** Process according to one or more of Claims 5 to 10, characterised in that one or more initiators are added to the polycondensate and the polycondensate is thermally or photochemically hardened.

**12.** Process according to one or more of Claims 5 to 11, characterised in that prior to polymerisation, one or more radically and/or cationically polymerisable components are added to the polycondensate.

**13.** Process for the production of polymerisates by the cationic polymerisation of one or more compounds containing 1,4,6-trioxaspiro-[4,4]-nonane and optionally of other cationically polymerisable compounds, and possibly by the radical polymerisation of one or more radically polymerisable compounds, by the action of heat or electromagnetic radiation, optionally in the presence of one or more initiators and/or a solvent, characterised in that 5 to 100% mol, on the basis of monomer compounds, of the compounds containing the 1,4,6-trioxaspiro-[4,4]-nonane are selected from silanes of the general formula (I)

$$Y_n\,Si\,X_m\,R_{4-(n+m)} \qquad (I)$$

in which the radicals X, Y and R are the same or different and relate to the following:

R = alkyl, aklenyl, aryl, alkylaryl or arylalkyl, optionally with one or more substituents from the halogen, alkyl, hydroxyalkyl, alkoxy, aryl, aryloxy, alkylcarbonyl, alkoxycarbonyl, furfuryl, tetrahydrofurfuryl, amino, alkyl amino, dialkyl amino, trialkyl ammonium, amido, hydroxy, formyl, carboxy, mercapto, cyano, nitro, epoxy, $SO_3H$ and $PO_4H_2$ group;

X = hydrogen, halogen, hydroxy, alkoxy, acyloxy, alkylcarbonyl, alkoxycarbonyl or $NR'_2$, optionally with one or more substituents from the halogen, alkyl, hydroxyalkyl, alkoxy, aryl, aryloxy, alkylcarbonyl, alkoxycarbonyl, furfuryl, tetrahydrofurfuryl, amino, alkyl amino, dialkyl amino, trialkyl ammonium, amido, hydroxy, formyl, carboxy, mercapto, cyano, nitro, epoxy, $SO_3H$ and $PO_4H_2$ group, and with R' = hydrogen, alkyl or aryl;

Y = a substituent containing a substituted or non-substituted 1,4,6-trioxaspiro-[4,4]-nonane radical which is bound to the Si atom via alkylene or alkenylene groups, and can optionally be substituted by hydroxyl, alkyl, alkenyl, aryl, alkylaryl, arylakyl, alkylcarbonyl, alkoxycarbonyl, acryloxy or methacryloxy groups;

n = 1, 2 or 3;

m = 1, 2 or 3, with $n+m \leq 4$ .

**14.** Process according to Claim 13, characterised in that one or more spiroorthoesters, spiroorthocarbonates, bicyclic spiroorthoesters, methacryloylspiroorthoesters, mono- or oligoepoxides are used as further cationically polymerisable compounds.

**15.** Process according to Claim 13 or 14, characterised in that one or more compounds of the general formula (IV) are used as radically polymerisable compounds

$$\{X_nR_kSi[R^2(A)_l]_{4-(n+k)}\}_xB \qquad (IV)$$

in which the radicals A, R, $R^2$ and X are the same or different and A, R, $R^2$, X, k, l, n and x relate to the same as specified in Claim 8.

**16.** Process according to one or more of Claims 13 to 15, characterised in that the polymerisate is hydrolytically condensed, optionally in the presence of further hydrolytically condensable compounds of silicon and optionally of other elements from the group B, Al, P, Sn, Pb, the transition metals, lanthanides and actinides, and/or pre-condensates derived from the above-mentioned compounds, by the action of water or moisture, optionally in the presence of a catalyst and/or a solvent.

**17.** Process according to Claim 16, characterised in that one or more compounds of the general formula (III), optionally in pre-condensed form, are used as further condensable compounds of silicon

$$R_a\,(R''Z')_b SiX_{4-(a+b)} \qquad \text{(III)}$$

in which the radicals R, R'' and Z' are the same or different and R, R'', Z', a and b relate to the same as specified in Claim 7.

**Revendications**

1. Silanes hydrolysables et polymérisables de formule générale (I),

$$Y_n\ Si\ X_m\ R_{4-(n+m)} \qquad \text{(I)}$$

dans laquelle les radicaux Y, Y et R sont identiques ou différents et ont la signification suivante :

R = alcoyle, alcényle, aryle, alcoylaryle ou arylalcoyle, avec éventuellement un ou plusieurs substituants choisis dans le groupe des halogène, alcoyle, hydroxyalcoyle, alcoxy, aryle, aryloxy, alcoylcarbonyle, alcoxycarbonyle, furfuryle, tétrahydrofurfuryle, amino, alcoylamino, dialcoylamino, trialcoylammonium, amido, hydroxy, formyl, carboxy, mercapto, cyano, nitro, epoxy, $SO_3H$ et $PO_4H_2$ ;

X = hydrogène, halogène, hydroxy, alcoxy, acyloxy, alcoylcarbonyle, alcoxycarbonyle, ou $NR'_2$, avec éventuellement un ou plusieurs substituants choisis dans les groupes formés d'halogène, alcoyle, hydroxyalcoyle, alcoxy, aryle, arylxy, alcoylcarbonyle, alcoxycarbonyle, furfuryle, tétrahydrofurfuryle, amino, alcoylamino, dialcoylamino, trialcoylammonium, amido, hydroxy, formyle, carboxy, mercapto, cyano, nitro, époxy, $SO_3H$ et $PO_4H_2$ et avec R' = hydrogène, alcoyle ou aryle ;

Y = un substituant qui contient un radical 1,4,6-trioxaspiro-[4,4]nonane substitué ou non substitué qui est relié par des groupes alcoylène ou alcenylène à l'atome de silicium et qui peut le cas échéant être substitué par des groupes hydroxyle, acoyle, alcenyle, aryle, alcoylaryle, arylalcoyle, alcoylcarbonyle, alcoxycarbonyle, acryloxy ou méthacryloxy ;

n = 1,2 ou 3, m = 1,2 ou 3, avec $n+m \leq 4$

2. Silanes selon la revendication 1, caractérisés en ce que Y est :

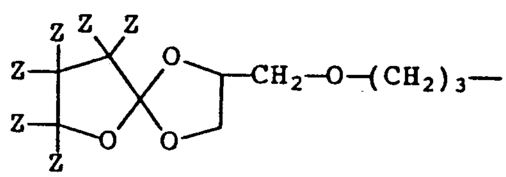

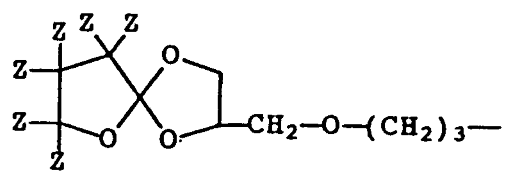

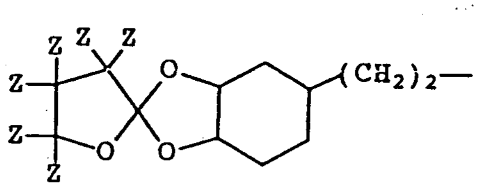

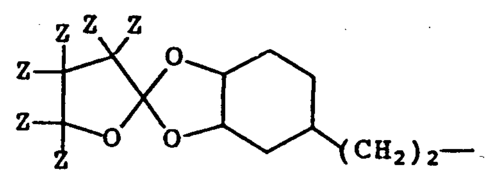

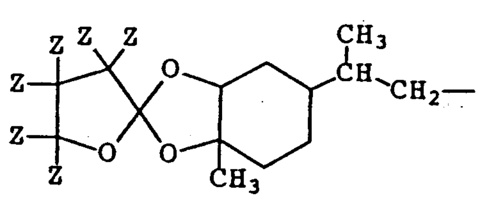

ou

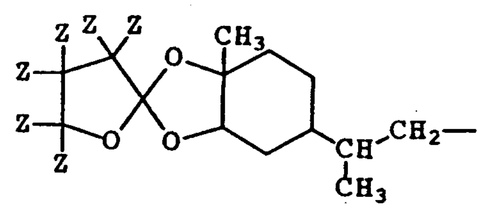

dans lesquelles les radicaux Z sont identiques ou différents et signifient de l'hydrogène, un hydroxyle, un alcoyle, un alcényle, un aryle, un alcoylaryle, un arylalcoyle, un alcoxycarbonyle ou un alcoylcarbonyle, et dans lesquelles des groupes hydroxyle géminaux ne sont pas présents.

**3.** Procédé d'obtention des silanes selon la revendication 1, caractérisé en ce que l'on fait réagir un silane de formule générale (II),

$$Y'_n\ Si\ X_m\ R_{4-(n+m)} \qquad (II)$$

dans laquelle les radicaux X, Y', et R sont identiques ou différents et où X, R, n et m ont la signification mentionnée à la revendication 1,
et Y' représente un radical qui contient un cycle oxirane substitué,
avec une γ-butyrolactone substituée ou non substituée en présence d'un acide de Lewis.

**4.** Procédé selon la revendication 3, caractérisé en ce que l'on met en jeu comme silane de formule générale (II) le 3-Glycidoxypropyldiméthyléthoxysilane, le 3-Glycidoxypropylméthyldiéthoxysilane, le 3-(glycidoxypropyl)méthyl-di-isopropenoxysilane, le 3-(glycidoxypropyl)triméthoxysilane, le 2-(3,4-Epoxycyclohexyl)éthyltriméthoxysilane ou le [2-(3,4-epoxy-4-méthylcyclohexyl)propyl]méthyldiéthoxysilane.

**5.** Procédé d'obtention de polycondensats d'acide silicique ou d'hétéropolycondensats d'acide silicique par condensation hydrolytique d'un ou plusieurs composés condensables hydrolytiquement du silicium et le cas échéant d'autres éléments choisis dans le groupe du B, Al, P, Sn, Pb, des métaux de transition des lanthanides ou des actinides et/ou des précondensats dérivés des composés cités ci-dessus, le cas échéant en présence d'un catalyseur et/ou d'un solvant, par action de l'eau ou de l'humidité, caractérisé en ce que 5 à 100 % molaire, sur la base des composés monomères des composés condensables par voie hydrolytique, sont choisis parmi les silanes de formule générale I,

$$Y_n\ Si\ X_m\ R_{4-(n+m)} \qquad (I)$$

dans laquelle les radicaux Y, Y et R sont identiques ou différents et ont la signification suivante :

R = alcoyle, alcényle, aryle, alcoylaryle ou arylalcoyle,
avec éventuellement un ou plusieurs substituants choisis dans le groupe des halogène, alcoyle, hydroxyalcoyle, alcoxy, aryle, aryloxy, alcoylcarbonyle, alcoxycarbonyle, furfuryle, tétrahydrofurfuryle, amino, alcoylamino, dialcoylamino, trialcoylammonium, amido, hydroxy, formyl, carboxy, mercapto, cyano, nitro, epoxy, $SO_3H$ et $PO_4H_2$ ;
X = hydrogène, halogène, hydroxy, alcoxy, acyloxy, alcoylcarbonyle, alcoxycarbonyle, ou $NR'_2$, avec éventuellement un ou plusieurs substituants choisis dans le groupe formé d'halogène, alcoyle, hydroxyalcoyle, alcoxy, aryle, arylxy, alcoylcarbonyle, alcoxycarbonyle, furfuryle, tétrahydrofurfuryle, amino, alcoylamino, dialcoylamino, trialcoylammonium, amido, hydroxy, formyle, carboxy, mercapto, cyano, nitro, époxy, $SO_3H$ et $PO_4H_2$ et
avec R' = hydrogène, alcoyle ou aryle ;
Y = un substituant qui contient un radical 1,4,6-trioxaspiro-[4,4]nonane substitué ou non substitué qui est relié par des groupes alcoylène ou alcenylène à l'atome de silicium et qui peut le cas échéant être substitué par des groupes hydroxyle, acoyle, alcenyle, aryle, alcoylaryle, arylalcoyle, alcoylcarbonyle, alcoxycarbonyle, acryloxy ou méthacryloxy ;
n = 1, 2 ou 3, m = 1, 2 ou 3, avec $n+m \leqq 4$ .

**6.** Procédé selon la revendication 5, caractérisé en ce que l'on met en jeu comme composés supplémentaires condensables hydrolytiquement, des composés éventuellement sous la forme précondensée, qui sont polymérisables par voie radicalaire ou cationique.

**7.** Procédé selon la revendication 5 ou 6, caractérisé en ce que l'on met en oeuvre comme composés du silicium supplémentaires, condensables hydrolytiquement, un ou plusieurs composés de formule générale (III) le cas échéant sous la forme pré-condensée,

$$R_a(R''Z')_bSiX_{4-(a+b)} \qquad (III)$$

dans laquelle les radicaux R, R'', X et Z' sont identiques ou différents et ont les significations suivantes :

R = alcoyle, alcényle, aryle, alcoylaryle, ou arylalcoyle,
R'' = alcoylène ou alcénylène, dans lesquels ces radicaux peuvent être interrompus par des atomes d'oxygène, ou de soufre ou des groupes NH,

X = hydrogène, halogène, hydroxy, alcoxy, acyloxy, alcoylcarbonyle ou $NR'_2$ avec,
R' = hydrogène, alcoyle ou aryle,
Z' = halogène ou un groupe amino éventuellement substitué, amido, aldéhyde, alcoylcarbonyle, carboxy, mercapto, cyano, alcoxy, alcoxycarbonyl, acide sulfonique, acide phosphorique, acryloxy, méthacryloxy, epoxy ou vinyle,
a = 0, 1, 2, ou 3,
b = 0, 1, 2, ou 3 avec a+b = 1, 2 ou 3 .

**8.** Procédé selon l'une ou plusieurs des revendications 5 à 7, caractérisé en ce que l'on met en oeuvre comme composés du silicium supplémentaires, condensables hydrolytiquement, un ou plusieurs composés de formule générale (IV) le cas échéant sous la forme pré-condensée,

$$(X_nR_kSi[R^2(A)_1]_{4-(n+k)})_xB \quad (IV)$$

dans laquelle les radicaux A, R, $R^2$ et X sont identiques ou différents et ont les significations suivantes :

A = 0, S, PR', POR', ou NHC(O)NR',
avec R' = hydrogène, alcoyle ou aryle,
B = un radical organique à chaîne droite ou ramifiée, qui dérive d'un composé B' avec au moins une (pour l = 1 et A = NHC(O)O, ou NHC(O)NR') ou au moins deux doubles liaisons C=C, et 5 à 50 atomes de carbone, avec R' = hydrogène, alcoyle ou aryle,
R = alcoyle, alcényle, aryle, alcoylaryle ou arylalcoyle,
$R^2$ = alcoylène, arylène ou alcoylène arylène,
X = hydrogène, halogène, hydroxy, alcoyxy, acyloxy, alcoylcarbonyle, alcoxycarbonyle, ou $NR'_2$,
avec R' = hydrogène, alcoyle ou aryle.
n = 1, 2 ou 3,
k = 0, 1 ou 2,
l = 0 ou 1.
x = est un nombre entier dont la valeur maximale correspond au nombre de doubles liaisons dans le composé B' moins 1 ou est égal au nombre de doubles liaisons dans le composé B' si l = 1 et A représente NHC(O)O ou NHC(O)NR'.

**9.** Procédé selon la revendication 8, caractérisé en ce que l'on met en oeuvre un composé de formule générale IV dans laquelle le reste B dérive d'un composé B substitué ou non substitué, ayant deux ou davantage de groupes acrylate et/ou méthacrylate.

**10.** Procédé selon l'une ou plusieurs des revendications 5 à 9, caractérisé en ce que l'on met en oeuvre comme composants condensables hydrolytiquement, supplémentaires, un ou plusieurs composés de l'aluminium, du titane ou du zirconium solubles dans le milieu réactionnel le cas échéant sous la forme pré-condensée de formule générale :

$$AlR°_3 \text{ ou } M\,X_y\,R_z$$

dans laquelle M signifie du titane ou du zirconium, les radicaux R', R et X sont identiques ou différents.

R° représente un halogène, un hydroxy, un alcoxy ou un acyloxy,
y est un nombre entier allant de 1 à 4 en particulier de 2 à 4,
z représente 0, 1, 2 ou 3 de préférence 0, 1 ou 2 et
X et R sont définis comme dans le cas de la formule générale (I).

**11.** Procédé selon l'une ou plusieurs des revendications 5 à 10, caractérisé en ce que l'on ajoute au polycondensat un ou plusieurs promoteurs et que l'on durcit le polycondensat par voie thermique ou photochimique.

**12.** Procédé selon l'une ou plusieurs des revendications 5 à 11, caractérisé en ce que l'on ajoute au polycondensat avant la polymérisation, un ou plusieurs composants polymérisables par voie radicalaire et/ou cationique.

**13.** Procédé d'obtention de polymérisats par polymérisation cationique d'un ou plusieurs composés contenant un 1,4,6-trioxaspiro[4,4]-nonane et le cas échéant d'autres composés polymérisables par voie cationique et le cas échéant par polymérisation radicalaire et un ou plusieurs composés polymérisables par voie radicalaire, par action de la chaleur ou d'une radiation électromagnétique, le cas échéant en présence d'un ou plusieurs promoteurs et/ou

d'un solvant, caractérisé en ce que 5 à 100 % molaire sur la base des composés monomères, de composés contenant le groupe 1,4,6-trioxaspiro[4,4]-nonane sont choisis parmi les silanes de formule générale (I),

$$Y_n \text{ Si } X_m \text{ } R_{4-(n+m)} \qquad \text{(I)}$$

dans laquelle les radicaux Y, Y et R sont identiques ou différents et ont la signification suivante :

R = alcoyle, alcényle, aryle, alcoylaryle ou arylalcoyle, ayant le cas échéant un ou plusieurs substituants choisis dans le groupe des halogènes, alcoyle, hydroxyalcoyle, alcoxy, aryle, aryloxy, alcoylcarbonyle, alcoxycabonyle, furfuryle, tétrahydrofurfuryle, aminoalcoylamino, dialcoylamino, trialcoylammonium, amido, hydroxy, formyl, carboxy, mercapto, cyano, nitro, epoxy, $SO_3H$ et $PO_4H_2$,
X = hydrogène, halogène, hydroxy, alcoxy, acyloxy, alcoylcarbonyle, alcoxycarbonyle, ou $NR'_2$ avec un ou plusieurs substituants choisis dans le groupe des halogènes, alcoyle, hydroxyalcoyle, alcoxy, aryle, aryloxy, alcoylcarbonyle, alcoxycarbonyle, furfuryle, tétrahydrofurfuryle, amino, alcoylamino, dialcoylamino, trialcoylammium, amido, hydroxy, formyl, carboxy, mercapto, cyano, nitro, epoxy, $SO_3H$ et $PO_4H_2$ et avec R' = hydrogène, alcoyle et aryle.
Y = un substituant qui contient un radical 1,4,6-trioxaspiro-[4,4]nonane substitué ou non substitué, qui est relié à l'atome de silicium et qui peut être substitué le cas échéant avec des groupes hydroxyle, alcoyle, alcényle, aryle, alcoylaryle, arylalcoyle, alcoylcarbonyle, alcoxycarbonyle, acryloxy ou méthacryloxy.
n = 1, 2 ou 3,
m = 1, 2 ou 3 avec $n+m \leqq 4$ .

**14.** Procédé selon la revendication 13, caractérisé en ce que l'on met en jeu comme composés polymérisables supplémentaires par voie cationique un ou plusieurs spiroorthoesters, spiroorthocarbonates, spiroorthoesters bicycliques, méthacryloylspiroorthoesters, mono ou oligoepoxydes.

**15.** Procédé selon la revendication 13 ou la revendication 14, caractérisé en ce que l'on met en jeu un ou plusieurs composés de formule générale (IV)

$$(X_nR_kSi[R^2(A)_1]_{4-(n+k)})_xB \qquad \text{(IV)}$$

dans laquelle les radicaux A, R, $R^2$ et X sont identiques ou différents et A, R, R2, X, k, l, n et x ont les significations citées à la revendication 8.

**16.** Procédé selon l'une des revendications 13 à 15, caractérisé en ce que l'on condense par voie hydrolytique le polymérisat, le cas échéant en présence d'autres composés condensables par voie hydrolytique, du silicium et le cas échéant d'autres éléments du groupe de B, Al, P, Sn, Pb, des métaux de transition, des lanthianides et des actinides et/ou des précondensats dérivés des composés mentionnés ci-dessus, par action de l'eau ou de l'humidité, le cas échéant en présence d'un catalyseur et/ou d'un solvant.

**17.** Procédé selon la revendication 16, caractérisé en ce que l'on met en oeuvre comme autres composés condensables du silicium, un ou plusieurs composés de formule générale (III), le cas échéant sous la forme précondensée,

$$R_a(R''Z')_bSiX_{4-(a+b)} \qquad \text{(III)}$$

dans laquelle les radicaux R, R", X et Z' sont identiques ou différents et R, R", Z', a et b ont les significations mentionnée à la revendication 7.